(19) Europäisches Patentamt
European Patent Office
Office européen des brevets

(11) EP 3 755 663 B1

(12) **FASCICULE DE BREVET EUROPEEN**

(45) Date de publication et mention de la délivrance du brevet:
**30.03.2022 Bulletin 2022/13**

(21) Numéro de dépôt: **19712823.4**

(22) Date de dépôt: **22.02.2019**

(51) Classification Internationale des Brevets (IPC):
***C02F 1/68*** *(2006.01)*

(52) Classification Coopérative des Brevets (CPC):
**C02F 1/683**

(86) Numéro de dépôt international:
**PCT/FR2019/050419**

(87) Numéro de publication internationale:
**WO 2019/162633 (29.08.2019 Gazette 2019/35)**

(54) **PROCÉDÉ DE DÉCONTAMINATION D'UN MILIEU LIQUIDE AQUEUX CONTENANT DES MICROPOLLUANTS OU D'UNE SURFACE CONTAMINÉE PAR DES MICROPOLLUANTS**

VERFAHREN ZUR DEKONTAMINIERUNG EINES WÄSSRIGEN FLÜSSIGEN MEDIUMS MIT MIKROPOLLUTANTEN ODER VON MIKROPOLLUTANTEN KONTAMINIERTEN OBERFLÄCHEN

PROCESS FOR DECONTAMINATING AN AQUEOUS LIQUID MEDIUM CONTAINING MICROPOLLUTANTS OR SURFACE CONTAMINATED BY MICROPOLLUTANTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2018 FR 1851548**
**23.03.2018 FR 1852544**

(43) Date de publication de la demande:
**30.12.2020 Bulletin 2020/53**

(73) Titulaires:
- **UNIVERSITE DE BORDEAUX**
  **33000 Bordeaux (FR)**
- **INSTITUT NATIONAL DE LA SANTE ET DE LA RECHERCHE MEDICALE - INSERM**
  **75013 Paris (FR)**
- **CENTRE NATIONAL DE LA RECHERCHE SCIENTIFIQUE -CNRS-**
  **75016 Paris (FR)**
- **Centre Hospitalier Universitaire de Bordeaux**
  **33404 Talence Cedex (FR)**

(72) Inventeurs:
- **BARTHELEMY, Philippe**
  **33700 Merignac (FR)**
- **CRAUSTE-MANCIET, Sylvie**
  **33000 Bordeaux (FR)**
- **SICARD, Marc**
  **33290 Parempuyre (FR)**

(74) Mandataire: **Santarelli**
**49, avenue des Champs-Elysées**
**75008 Paris (FR)**

(56) Documents cités:
**WO-A1-2013/110902**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 755 663 B1

## Description

L'invention concerne un procédé de décontamination d'un milieu liquide aqueux contenant des micropolluants moléculaires ou d'une surface contaminée par des micropolluants mettant en œuvre des composés nucléolipidiques.

En particulier, l'invention concerne un procédé de traitement d'un milieu liquide aqueux ou d'une surface permettant de soustraire dudit milieu ou de ladite surface les micropolluants moléculaires qui y sont présents, notamment ceux provenant de médicaments métabolisés.

Les activités humaines, qu'elles soient domestiques, commerciales ou industrielles, libèrent dans l'eau des polluants tels que des matières organiques, des pesticides, des détergents, des hydrocarbures, des médicaments etc.

Ces déchets chimiques modifient et dégradent la qualité de l'eau.

Les concentrations en polluants dans l'eau de mer dépendent du composé, mais sont généralement de l'ordre du nanogramme au microgramme par litre. On parle ainsi de micropolluants, c'est-à-dire, par exemple, des substances anthropiques ou naturelles prévenant de différentes origines (produits pharmaceutiques, produits de soins, produits chimiques industriels etc.) présentes dans les eaux à des concentrations, notamment, de l'ordre du ng/L à celle du μg/L (Y. Luo et al., Science of the Total Environment, 2014, 473-474, 619-641).

Par exemple, après métabolisation dans l'organisme humain, les médicaments sont rejetés dans les systèmes d'évacuation sanitaire sous leur forme initiale ou sous forme de métabolites (B. Halling-Sorensen, Chemosphere, 1998, 36, 357-393), puis traités dans les unités de traitement des eaux usées.

Cependant, les micropolluants ne sont que partiellement dégradés, et engendrent des produits de dégradation qui peuvent présenter une toxicité supérieure à celle des médicaments originaux. (M. Isidori et al., Sci Total Environ, 2005, 348, 93-101). Ainsi, des études ont montré que différents médicaments, en particulier le Diclofénac® (antiinflammatoire non stéroïdien) et le Propranolol® (bêta-bloquant), médicaments largement utilisés, se retrouvent dans différents milieux aqueux de consommation ou environnementaux (R. Rosal et al, Water Res., 2010, 44, 578-588), notamment de l'eau de boisson.

De plus, même si la concentration de chaque micropolluant dans le milieu aqueux peut ne pas atteindre un niveau toxique, l'association cumulée de différents micropolluants peut atteindre des niveaux de toxicité considérablement plus élevés (R. Renner et al., Environ Sci Technol, 2002, 36, 268A-269A), et affecter tous types d'organismes vivants.

De même, en milieu hospitalier (pharmacie ou services de soins), vétérinaire ou en pharmacie notamment, il existe un certain nombre de surfaces qui sont régulièrement en contact avec des micropolluants, notamment issus de produits pharmaceutiques. Ces surfaces deviennent des sources potentielles d'exposition à ces micropolluants.

La décontamination d'un milieu liquide contenant des micropolluants, en particulier d'un milieu liquide aqueux, ou d'une surface contaminée par de tels micropolluants représente donc un enjeu de santé publique.

Ce problème se pose de façon cruciale en ce qui concerne les micropolluants issus de médicaments, ceux-ci étant hautement solubles dans l'eau.

Les solutions de filtration existantes ne donnent pas de résultats totalement satisfaisants (Y. Luo et al., Science of the Total Environment, 2014, 473-474, 619-641).

On a maintenant trouvé qu'il était possible de mettre en œuvre des composés nucléolipidiques pour décontaminer un milieu liquide aqueux contenant des micropolluants, lesdits micropolluants étant sous forme de molécules en solution dans ledit milieu, ou une surface contaminée par de tels micropolluants.

L'invention ne se limite toutefois pas aux milieux liquides aqueux et peut être appliquée à des milieux liquides non aqueux.

Les composés nucléotidiques amphiphiles, également dénommés nucléolipides ou composés nucléolipidiques, sont des composés biocompatibles constitués d'un lipide lié de manière covalente à un nucléotide. Ils sont non toxiques, biodégradables, et ont fait la preuve de leurs intéressantes propriétés dans les domaines des gels biocompatibles ou de l'imagerie médicale, ou encore dans des formulations nanoparticulaires utiles comme vecteurs médicamenteux.

Dans la présente description, on utilisera indifféremment les termes « nucléolipides » ou « composés nucléolipidiques ».

Par exemple, les demandes WO2009/098404 et WO2010/136676 concernent la préparation et les utilisations de tels composés pour le transport ou la vectorisation d'agents thérapeutiques.

La demande WO 2016/170010 concerne des nano-formulations nonpolymériques à base de lipides, chargées en particule métallique et en agent thérapeutique, en tant qu'agents pour le transport, la vectorisation, la délivrance intra-cellulaire, le ciblage cellulaire ou la localisation cellulaire dudit agent thérapeutique.

La demande WO2013/110902 décrit un procédé de décontamination d'un milieu liquide contenant des particules par des hydrogels formés à partir de nucléolipides et/ou d'un composé organique issu d'organisme vivant (méduse).

Comme indiqué à la p.4, l. 30 jusqu'à la 1.5-16 de cette demande, lesdites particules sont définies comme étant un agrégat résultant de l'association de molécules organiques et/ou inorganiques, ne possédant pas de masse moléculaire, et excluent les molécules en solution. Cette demande définit également le terme « nanoparticule », comme

une particule de taille nanométrique ladite nanoparticule étant un assemblage de molécules dont au moins une dimension se situe à l'échelle nanométrique, ou encore une particule dont le diamètre nominal est inférieur à 100 nm, de préférence compris entre 0,5 nm et 100 nm.

WO2013/110902 cite notamment à titre d'exemples de particules ou de nanoparticules les nanocristaux semiconducteurs fluorescents (« QDs », « points quantiques » ou « quantum dots » en anglais) ou les nanoparticules d'or (AuNPs) qui sont des composés inorganiques de taille nanométrique.

L'exemple 1 de WO2013/110902 décrit la décontamination d'une suspension aqueuse de micelles contenant des QDs par un hydrogel formé à partir de composés glycosyl-nucléosidiques amphiphiles fluorés (GNFs). L'exemple 2 décrit la décontamination d'une solution contenant des particules d'or (AuNPs) par un hydrogel formé à partir de GNFs. Les exemples de WO2013/110902 ne décrivent donc pas la décontamination d'un milieu liquide aqueux contenant des micropolluants sous forme moléculaire.

L'invention concerne donc un procédé de décontamination d'un milieu liquide aqueux contenant au moins un micropolluant sous forme moléculaire, ou d'une surface contaminée par un micropolluant, comprenant

- une étape de mise en contact dudit milieu liquide aqueux contenant au moins un micropolluant sous forme moléculaire ou de ladite surface contaminée par un micropolluant avec au moins un composé nucléolipidique de formule (I)

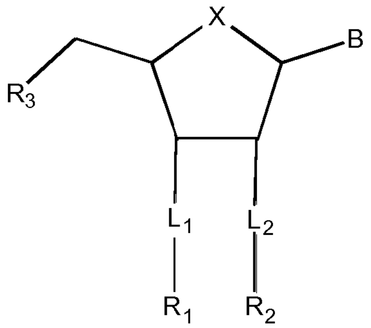

(I)

dans laquelle

- X est un atome d'oxygène, de soufre ou un groupe méthylène
- B représente une base purique ou pyrimidique, ou encore une base hétérocylique mono-ou bi-cyclique non naturelle dont chaque cycle comporte 4 à 7 chaînons, éventuellement substituée ;
- $L_1$ et $L_2$, identiques ou différents, représentent l'hydrogène, un groupe oxycarbonyl -O-C(O)-, un groupe thiocarbamate -O-C(S)-NH-, un groupe carbonate -O-C(O)-O-, un groupe carbamate -O-C(O)-NH-, un atome d'oxygène, un groupe phosphate, un groupe phosphonate ou un groupe hétéroaryle comprenant 1 à 4 atomes d'azote, substitué ou non substitué par une chaîne hydrocarbonée, saturée ou insaturée, linéaire ou ramifiée en $C_8$-$C_{30}$;
- ou $L_1$ représente un groupe phosphate ou phosphonate et $L_2$ représente l'hydrogène;
- ou encore, $L_1$ et $L_2$, ensemble, forment un groupement cétal de formule

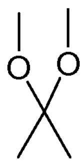

- ou encore $L_1$ ou $L_2$ représente l'hydrogène, et l'autre représente un groupe hydroxy ou un groupe hétéroaryle comprenant 1 à 4 atomes d'azote, non substitué ou substitué par une chaîne alkyle linéaire ou ramifiée en $C_8$-$C_{30}$;
- $R_1$ et $R_2$, identiques ou différents, représentent :
- une chaîne hydrocarbonée linéaire ou ramifiée en $C_8$-$C_{30}$, saturée ou comportant une ou plusieurs insaturations,
- une chaîne acyle en $C_8$-$C_{30}$,
- une chaîne diacyle dans laquelle chaque chaîne acyle est en $C_8$-$C_{30}$,
- un groupe diacylglycérol dans lequel chaque chaîne acyle est en $C_8$-$C_{30}$,
- un groupe sphingosine ou céramide, ou
- lorsque $L_1$ ou $L_2$ représente l'hydrogène, et l'autre représente un groupe hydroxy ou un groupe hétéroaryle

comprenant 1 à 4 atomes d'azote, $R_1$ et $R_2$ n'existent pas ;

- $R_3$ représente :
- un groupement hydroxy, amino, phosphate, phosphonate, phosphatidylcholine, O-alkyl phosphatidylcholine, thiophosphate, phosphonium, $NH_2$-$R_4$, $NHR_4R_5$ ou $NR_4R_5R_6$ dans lesquels $R_4$, $R_5$ et $R_6$, identiques ou différents, représentent un atome d'hydrogène ou une chaîne alkyle linéaire ou ramifiée en $C_1$-$C_6$ ou hydroxyalkyle linéaire ou ramifié en $C_1$-$C_6$, ou
- une chaîne alkyle linéaire ou ramifiée en $C_2$-$C_{30}$ éventuellement substituée par un groupe hydroxy, ou
- un groupe hétéroaryle renfermant 1 à 4 atomes d'azote, non substitué ou substitué par un alkyle en $C_2$-$C_{30}$, ou par un groupe $(CH_2)_m$-O-$(CH_2)_p$-$R_9$ dans lequel m = 1 à 6 et p = 0 à 20 et $R_9$ représente l'hydrogène ou un groupe cétal cyclique renfermant 5 à 7 atomes de carbone, non substitué ou substitué par au moins un alkyle linéaire ou ramifié en $C_2$-$C_{30}$ ou par un reste stérol, ou encore
- $R_3$ est lié par liaison covalente à un autre substituant $R_3$, identique ou différent, d'un autre composé de formule (I), identique ou différent, pour former un composé de formule (I) sous forme de dimère,

et

- une étape de séparation de l'agrégat formé par ledit micropolluant sous forme moléculaire avec ledit au moins un composé nucléolipidique de formule (I).

Selon un aspect, l'invention concerne un procédé de décontamination d'un milieu liquide aqueux contenant au moins un micropolluant sous forme moléculaire, ou d'une surface contaminée par un micropolluant, comprenant

- une étape de mise en contact dudit milieu liquide aqueux contenant au moins un micropolluant sous forme moléculaire ou de ladite surface contaminée par au moins un micropolluant avec au moins un composé nucléolipidique de formule (I)

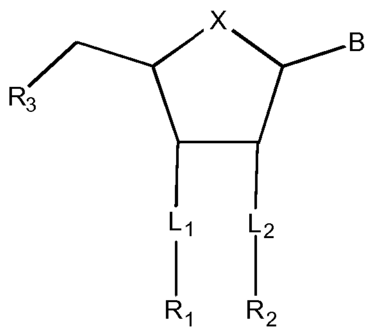

(I)

et

- une étape de séparation de l'agrégat formé par ledit au moins un micropolluant sous forme moléculaire avec ledit au moins un composé nucléolipidique de formule (I) dans ledit milieu liquide aqueux ou de l'agrégat formé par ledit au moins un micropolluant avec ledit au moins un composé nucléolipidique de formule (I) sur ladite surface.

L'invention concerne également l'utilisation des composés de formule (I) tels que définis ci-dessus pour la décontamination d'un milieu liquide aqueux contenant au moins un micropolluant sous forme moléculaire, ou d'une surface contaminée par de tels micropolluants.

L'invention concerne, en particulier, un procédé de décontamination d'un milieu liquide aqueux contenant au moins un micropolluant sous forme moléculaire, comprenant

- une étape de mise en contact dudit milieu liquide aqueux contenant au moins un micropolluant sous forme moléculaire avec au moins un composé nucléolipidique de formule (I)

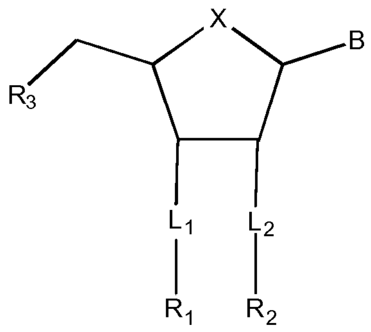

(I)

telle que définie ci-dessus,
et

- une étape de séparation de l'agrégat formé par ledit micropolluant sous forme moléculaire avec ledit au moins un composé nucléolipidique de formule (I).

En particulier, le procédé de décontamination selon l'invention permet de diminuer la concentration en micropolluant moléculaire dans ledit milieu liquide aqueux ou sur ladite surface, de préférence jusqu'à une concentration inférieure à celle susceptible de provoquer une toxicité identifiée dudit milieu ou de ladite surface.

Avantageusement, le procédé de décontamination selon l'invention peut permettre de décontaminer un milieu liquide aqueux dans lequel ledit micropolluant est présent à une très faible concentration, notamment inférieure à 1 mg par litre, en particulier de l'ordre du $\mu$g par litre.

L'invention concerne également un procédé de décontamination d'une surface contaminée par au moins un micropolluant, comprenant

- une étape de mise en contact de ladite surface contaminée par au moins un micropolluant avec au moins un composé nucléolipidique de formule (I)

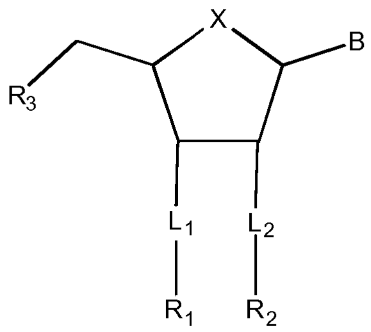

(I)

telle que définie ci-dessus
et

- une étape de séparation de l'agrégat formé par ledit au moins un micropolluant avec ledit au moins un composé nucléolipidique de formule (I) sur ladite surface.

Dans un aspect particulier, ledit micropolluant contaminant ladite surface peut être sous forme moléculaire.

Notamment, ledit micropolluant sous forme moléculaire est un médicament, un dérivé de médicament ou un métabolite de médicament humain ou vétérinaire.

Par exemple, ledit micropolluant peut être choisi parmi les composés ou substances CMR (cancérigènes mutagènes reprotoxiques), les médicaments cytotoxiques classés comme cancérigènes par le CIRC (1 & 2), les médicaments pour lesquels des effets toxiques sur la reproduction ont été identifiés, les médicaments sensibilisants tels que les antibiotiques (ofloxacine, ciprofloxacine, érythromycine), les anti-inflammatoires non stéroïdiens (diclofénac), les beta-bloquants (propranolol, métoprolol), les psychotropes (carbamazépine, fluoxétine), les acaricides (dichlorvos), les alcaloïdes (caféine) et les oestrogènes (éthinylestradiol).

Le micropolluant peut également être un produit phytosanitaire ou un dérivé de produit phytosanitaire. Par exemple, le micropolluant peut être choisi parmi les herbicides (diuron, isoproturon, alachlore ou aclonifène par exemple), les insecticides (chlorfenvinphos par exemple) ou les fongicides (notamment les phénoxyquinoléines telles que le quinoxifène).

Dans un mode de réalisation préféré, le micropolluant est choisi parmi l'ofloxacine, la ciprofloxacine, l'érythromycine, le diclofénac, le propranolol, le métoprolol, la carbamazépine, la fluoxétine, le dichlorvos, la caféine, l'éthinylestradiol, le diuron, l'isoproturon, l'alachlore, l'aclonifène, le chlorfenvinphos, et le quinoxifène.

Dans un autre mode de réalisation préféré, le micropolluant est choisi parmi les composés ou substances CMR ou un dérivé ou un métabolite de ceux-ci. Les CMR sont des substances cancérigènes, mutagènes et/ou reprotoxiques qui sont notamment listées par l'INRS.

Dans un autre mode de réalisation préféré, le micropolluant est choisi parmi les médicaments qui présentent une toxicité reconnue de type cancérigène, tératogène, toxique pour la reproduction ou sur le développement, génotoxique, ou qui présentent une toxicité d'organe à très faible concentration ou qui sont sensibilisants.

Par exemple, le micropolluant peut être choisi parmi les médicaments cytotoxiques classiquement utilisés en clinique humaine dans le traitement des cancers, comme le cyclophosphamide, la doxorubicine, un taxane tel que paclitaxel ou docetaxel, un dérivé de platine ou le 5 fluorouracile.

Selon un aspect de l'invention, on met en œuvre un seul composé de formule (I).

Alternativement, on met en œuvre 2 ou plus de 2 composés de formule (I) différents, de manière simultanée ou séquentielle. Avantageusement, la mise en œuvre simultanée ou séquentielle de composés de formule (I) distincts permet la décontamination de différents micropolluants.

Par « milieu liquide aqueux », on entend tout mélange contenant au moins un liquide et dont le solvant est l'eau, ou un échantillon de celui-ci.

Par « décontamination d'un milieu liquide aqueux contenant au moins un micropolluant », on entend le fait de soustraire ledit micropolluant dudit milieu, totalement ou partiellement.

On entend par « soustraire un micropolluant sous forme moléculaire d'un milieu liquide aqueux le contenant» le fait de piéger ou capturer les molécules de micropolluant présentes dans ledit milieu, ou d'en diminuer la concentration, en vue de les retirer totalement ou partiellement dudit milieu.

Sans vouloir lier l'invention à une théorie, on peut émettre l'hypothèse selon laquelle, dans le procédé selon l'invention, lesdites molécules de micropolluant sont piégées ou capturées par les composés nucléolipidiques de formule (I) qui interagissent avec celles-ci sans former de gel. De ce fait, lorsque le micropolluant se trouve sous forme moléculaire, notamment en milieu liquide, chaque molécule de micropolluant est susceptible interagir séparément avec ledit composé de formule (I), augmentant ainsi significativement l'efficacité de la décontamination. Cette interaction permet de former un agrégat qu'il est ensuite possible d'enlever dudit milieu liquide par une méthode de séparation usuelle.

On entend par « décontaminer une surface contaminée par un micropolluant » le fait de piéger ou capturer les molécules de micropolluant présentes sur ladite surface, ou d'en diminuer la concentration, en vue de les retirer totalement ou partiellement de ladite surface.

Par « micropolluant sous forme moléculaire », « micropolluant moléculaire » ou « molécule de micropolluant », on entend que ledit micropolluant a une taille inférieure à celle d'une particule de taille nanométrique (nanoparticule).

On entend par « nanoparticules », des particules de taille nanométrique (ou particules outre-fines), selon la norme ISO TS/27687, comme étant un assemblage de molécules dont au moins une des dimensions se situe à l'échelle nanométrique. Par exemple, une nanoparticule peut être définie selon la norme ISO précitée comme étant un nano-objet dont les trois dimensions sont à l'échelle nanométrique, c'est-à-dire des particules dont le diamètre nominal est compris entre 0,5 nm et 100 nm.

Selon l'invention, ledit « micropolluant sous forme moléculaire », « micropolluant moléculaire » ou ladite « molécule de micropolluant », ces termes étant utilisés indifféremment, peut être constitué d'une seule molécule.

En particulier, ledit micropolluant sous forme moléculaire est un micropolluant dont une des dimensions est inférieure à 0,5 nm.

Selon un aspect de l'invention, ledit micropolluant sous forme moléculaire a un diamètre nominal inférieur à 0,5 nm.

Selon un aspect de l'invention, ledit micropolluant sous forme moléculaire est une molécule organique.

Selon un aspect de l'invention, ledit micropolluant moléculaire a une masse molaire comprise entre 60 g/mole et 5000 g/mole, de préférence entre 100 g/mole et 1000 g/mole.

Avantageusement, ledit micropolluant sous forme moléculaire répond à au moins une des définitions ci-dessus, en particulier lorsqu'il est présent dans un milieu liquide aqueux.

Un milieu liquide aqueux ou échantillon de celui-ci peut être, par exemple, de l'eau pour consommation humaine ou animale, en particulier de l'eau de boisson ; de l'eau de baignade (plan d'eau ou piscine) ; de l'eau utilisée dans l'industrie agro-alimentaire ou pharmaceutique ; de l'eau provenant d'un plan d'eau ou d'un lac; de l'eau côtière ; de l'eau de rivière ; de l'eau de surface ; de l'eau souterraine, de l'eau utilisée pour l'agriculture, notamment pour l'irrigation ; de l'eau douce ou de mer utilisée pour l'aquaculture ; de l'eau industrielle, en particulier des eaux usées industrielles ou des effluents provenant d'une mine, des effluents hospitaliers, etc ; ou tout milieu liquide aqueux dans lequel la présence de micropolluants doit être contrôlée, et, le cas échéant, qui doit être soumis à une décontamination vis-à-vis

dudit micropolluant.

A titre d'exemple de surface pouvant être contaminée, on peut citer, par exemple, une surface usuelle se trouvant dans un lieu recevant du public ou des animaux tels que, par exemple, un lieu de loisirs, un laboratoire, un hôpital, un site industriel, un site agricole etc., sous forme de surface plane ou non plane, de surface de revêtement, d'objet manufacturé (tel que du matériel de laboratoire), etc. On peut citer, par exemple, les surfaces à base de verre (par exemple, verre sodocalcique ou borosilicate, verre de quartz), à base de polymères tels que le polycarbonate, le polyacrylate, le polypropylène ou le poly(chlorure de vinyle) ou PVC, à base de silicone, ou à base de métaux tels que l'inox.

La base purique ou pyrimidique du composé de formule (I) peut, par exemple, être choisie parmi adénine, guanine, cytosine, xanthine, hypoxanthine, acide urique, caféine, théobromine, uracile, thymine, dihydrouridine, et leurs dérivés.

Thymine et uracile sont préférées.

Dans la présente description, les aspects préférés s'appliquent à tous les modes de réalisation de l'invention.

Dans la formule (I) ci-dessus, la base purique ou pyrimidique peut être substituée par au moins un substituant choisi, par exemple, parmi un halogène, un groupe amino, un groupe carboxy, un groupe carbonyle, un groupe carbonylamino, un groupe hydroxy, azido, cyano ou thiol, un groupe alkyle en $C_1$-$C_6$ linéaire ou ramifié, un groupe cycloalkyle, perfluoroalkyle, alkyloxy (par exemple, méthoxy), oxycarbonyle, vinyle, éthynyle, propynyle, acyle etc.

Par « dérivé de base purique or pyrimidique », on entend, par exemple, une base non naturelle hétérocyclique mono- or bi-cyclique dans laquelle chaque cycle comprend 4 à 7 membres, éventuellement substituée comme indiqué ci-dessus.

Par « base non naturelle hétérocyclique mono- ou bi-cyclique», on entend, par exemple, une base universelle, telle que, par exemple, 3-nitropyrrole, 4-nitroimidazole ou 5-nitroindole, qui n'existe pas dans la nature.

Par « groupe hétéroaryle comprenant 1 à 4 atomes d'azote », on entend un groupe carbocyclique mono- ou bi-cyclique, aromatique ou partiellement insaturé, comprenant 5 à 12 atomes au total, interrompu par 1 à 4 atomes d'azote, qui peut être, par exemple, choisi parmi les groupes furane, pyrrole, oxazole, oxadiazole, isoxazole, pyrazole, triazole, tétrazole, imidazole, pyridine, pyrimidine, pyridazine, pyrazine, benzofurane, indole, quinoléine, isoquinoléine, chromane, naphtyridine et benzodiazine, triazole étant préféré.

Dans la formule (I) ci-dessus, la chaîne acyle, lorsqu'elle est présente, est une chaîne en $C_8$-$C_{30}$, de préférence $C_8$-$C_{26}$, et de manière plus préférée une chaîne acyle en $C_{16}$-$C_{20}$.

La chaîne hydrocarbonée linéaire ou ramifiée, lorsqu'elle est présente, est une chaîne en $C_8$-$C_{30}$, de préférence en $C_8$-$C_{26}$, et de manière plus préférée en $C_{16}$-$C_{20}$, saturée ou comportant une ou plusieurs insaturations.

La chaîne alkyle linéaire ou ramifiée, lorsqu'elle est présente, est une chaîne en $C_2$-$C_{30}$, de préférence en $C_2$-$C_{20}$, et de manière plus préférée en $C_8$-$C_{20}$.

Le cas échéant, le contre-ion peut être choisi, par exemple, parmi les cations monovalents, tels que $Na^+$, $Li^+$, $K^+$, $NH_4^+$.

Alternativement, lorsque, dans la formule (I) définie ci-dessus, $R_3$ représente un groupement cationique, par exemple un groupement phosphonium ou $NR_4R_5R_6$ tel que défini plus haut, le contre-ion peut être choisi, par exemple, parmi les anions tosylate, halogénure, nitrate, sulfate, sulfonate, et thiosulfate.

Ainsi, en l'absence de contre-ion, les composés de formule (I) peuvent être chargés négativement, comme, par exemple, le composé Thymidine 3'-(1,2-dipalmitoyl-sn-glycero-3-phosphate), également dénommé diC16dT, ou positivement, comme, par exemple, le composé (N-[5'-(2',3'-dioléoyl)uridine]-N',N',N'-triméthylammonium tosylate) également dénommé DOTAU.

Selon un mode de réalisation, on met en œuvre au moins un composé de formule (I) dans laquelle :

- X est un atome d'oxygène, de soufre ou un groupe méthylène
- B représente une base purique ou pyrimidique;
- $L_1$ et $L_2$, identiques ou différents, représentent l'hydrogène, un groupe oxycarbonyl -O-C(O)-, un groupe thiocarbamate -O-C(S)-NH-, un groupe carbonate -O-C(O)-O-, un groupe carbamate -O-C(O)-NH-, un atome d'oxygène, un groupe phosphate, un groupe phosphonate ou un groupe hétéroaryle comprenant 1 à 4 atomes d'azote, substitué ou non substitué par une chaîne hydrocarbonée, saturée ou insaturée, linéaire ou ramifiée en $C_8$-$C_{30}$;
- $R_1$ et $R_2$, identiques ou différents, représentent :
- une chaîne hydrocarbonée linéaire ou ramifiée en $C_8$-$C_{30}$, saturée ou comportant une ou plusieurs insaturations,
- une chaîne acyle en $C_8$-$C_{30}$,
- une chaîne diacyle dans laquelle chaque chaîne acyle est en Cs-C30,
- un groupe diacylglycérol dans lequel chaque chaîne acyle est en Cs-$C_{30}$,
- $R_3$ représente un groupement $NH_2$-$R_4$, $NHR_4R_5$ ou $NR_4R_5R_6$ dans lesquels $R_4$, $R_5$ et $R_6$, identiques ou différents, représentent un atome d'hydrogène ou une chaîne alkyle linéaire ou ramifiée en $C_1$-$C_6$ ou hydroxyalkyle linéaire ou ramifiée en $C_1$-$C_6$, ou un groupe hétéroaryle renfermant 1 à 4 atomes d'azote, non substitué ou substitué par

un alkyle en $C_2$-$C_{30}$, ou par un groupe $(CH_2)_m$-O-$(CH_2)_p$-$R_9$ dans lequel m = 1 à 6 et p = 0 à 20 et $R_9$ représente l'hydrogène.

Des composés nucléolipidiques de formule (I) préférés aux fins de l'invention sont ceux dans lesquels:

- X est un atome d'oxygène;
- B est choisi parmi adénine, guanine, cytosine, thymine et uracile, thymine et uracile étant préférées;
- $L_1$ et $L_2$, identiques ou différents, représentent un groupe oxycarbonyl -O-C(O)-, un groupe carbonate -O-C(O)-O-, un groupe carbamate -O-C(O)-NH-, un atome d'oxygène ou un groupe phosphate et/ou l'un de $L_1$ et $L_2$ représente l'hydrogène ;
- $R_1$ et $R_2$, identiques ou différents, représentent une chaîne hydrocarbonée linéaire ou ramifiée en $C_8$-$C_{30}$, saturée ou comportant une ou plusieurs insaturations, une chaîne acyle en $C_8$-$C_{30}$, une chaîne diacyle dans laquelle chaque chaîne acyle est en $C_8$-$C_{30}$ ou un groupe diacylglycérol dans lequel chaque chaîne acyle est en $C_8$-$C_{30}$ ;
- $R_3$ représente un groupement hydroxy, amino, phosphate, phosphonate, thiophosphate, phosphonium, $NH_2$-$R_4$, $NHR_4R_5$ ou $NR_4R_5R_6$ dans lesquels $R_4$, $R_5$ et $R_6$, identiques ou différents, représentent un atome d'hydrogène ou une chaîne alkyle linéaire ou ramifiée en $C_1$-$C_6$ ou hydroxyalkyle linéaire ou ramifié en $C_1$-$C_6$.

Des composés nucléolipidiques de formule (I) préférés aux fins de l'invention sont ceux dans lesquels:

- X est un atome d'oxygène;
- B est choisi parmi adénine, guanine, cytosine, thymine et uracile, thymine et uracile étant préférées;
- $L_1$ est un groupe phosphate substitué par un groupe $R_1$, dans lequel $R_1$ est un groupe diacylglycérol dans lequel chaque groupe acyle est en $C_8$-$C_{30}$, de préference $C_8$-$C_{26}$, ou de manière plus préférée $C_{16}$-$C_{20}$, $L_2$ est l'hydrogène et R2 n'existe pas, ou
- $L_1$ et $L_2$ représentent respectivement un groupe oxycarbonyl -O-C(O)-substitué par un groupe $R_1$ et un groupe oxycarbonyl -O-C(O)- substitué par un groupe $R_2$, et $R_1$ et $R_2$, identiques ou différents, représentent chacun une chaîne hydrocarbonée linéaire ou ramifiée en $C_8$-$C_{30}$, de préférence en $C_{16}$-$C_{20}$, comportant une ou plusieurs insaturations,
- $R_3$ est un groupe hydroxy ou un groupe $NR_4R_5R_6$ dans lesquels $R_4$, $R_5$ et $R_6$ représentent un atome d'hydrogène.

En particulier, on utilisera des composés de formule (I) dans laquelle :

- X est un atome d'oxygène;
- B est la thymine;
- $L_1$ est un groupe phosphate substitué par un groupe $R_1$, dans lequel $R_1$ est un groupe diacylglycérol dans lequel chaque groupe acyle est en $C_8$-$C_{30}$, de préférence en $C_8$-$C_{26}$, ou de manière plus préférée en $C_{16}$-$C_{20}$, $L_2$ est l'hydrogène et $R_2$ n'existe pas, et,
- $R_3$ est un groupe hydroxy.

D'autres composés préférés de formule (I) sont ceux dans laquelle :

- X est un atome d'oxygène;
- B représente l'uracile;
- $L_1$ représente un groupe oxycarbonyl -O-C(O)- substitué par un groupe $R_1$,
- $L_2$ représente un groupe oxycarbonyl -O-C(O)- substitué par un groupe $R_2$,
- $R_1$ et $R_2$, identiques ou différents, représentent chacun une chaîne hydrocarbonée linéaire ou ramifiée, en $C_8$-$C_{30}$, de préférence en $C_{16}$-$C_{20}$, comportant une ou plusieurs insaturations,
- $R_3$ est un groupe $NR_4R_5R_6$ dans lesquels $R_4$, $R_5$ et $R_6$ représentent un atome d'hydrogène.

Des composés particulièrement préférés de formule (I) sont les composés :

- Thymidine 3'-(1,2-dipalmitoyl-sn-glycero-3-phosphate), également dénommé diC16dT (CAS Registry Number: 1160002-70-9);
- (N-[5'-(2',3'-dioléoyl)uridine]-N',N',N'-triméthylammonium tosylate) également dénommé DOTAU, préparé comme décrit dans P. Chabaud et al., Bioconjugate Chem., 2006, 17, 466-472.

Pour la préparation des composés de formule (I), on peut se référer à la demande WO 2005/116043, qui décrit différentes voies d'accès à ce type de composés (en particulier p. 8-17 et exemples), ainsi qu'aux demandes

WO2009/098404 ou WO 2010/136676 et à la publication P. Chabaud et al., Bioconjugate Chem., 2006, 17, 466-472 (préparation de DOTAU).

Selon un mode de réalisation de l'invention, on met en œuvre un composé nucléolipidique de formule (I) sous forme de dimère dans lequel une première molécule de formule (I) ayant un groupement $R_3$ est liée à une seconde molécule de formule (I) ayant un groupement $R_3$ identique ou différent du groupement $R_3$ de la première molécule de formule (I), la liaison entre le groupement $R_3$ de la première molécule de formule (I) et le groupement $R_3$ de la seconde molécule de formule (I) étant une liaison covalente.

Selon un aspect préféré, l'invention concerne un procédé de décontamination d'un milieu liquide aqueux contenant au moins un micropolluant sous forme moléculaire, ou d'une surface contaminée par au moins un tel micropolluant, comprenant

- une étape de mise en contact dudit milieu liquide aqueux contenant au moins un micropolluant sous forme moléculaire ou de ladite surface contaminée par un micropolluant avec au moins un composé nucléolipide de formule (I) telle que définie plus haut,
- une étape d'incubation dudit milieu liquide aqueux contenant au moins un micropolluant sous forme moléculaire ou de ladite surface contaminée par un micropolluant avec au moins un composé nucléolipide de formule (I) telle que définie plus haut, et
- une étape de séparation de l'agrégat formé par ledit micropolluant sous forme moléculaire avec ledit au moins un composé nucléolipide de formule (I).

Selon un aspect, l'invention concerne un procédé de décontamination d'un milieu liquide aqueux contenant au moins un micropolluant sous forme moléculaire, ou d'une surface contaminée par au moins un micropolluant, comprenant

- une étape de mise en contact dudit milieu liquide aqueux contenant au moins un micropolluant sous forme moléculaire ou de ladite surface contaminée par un micropolluant avec au moins un composé nucléolipide de formule (I) telle que définie plus haut,
- une étape d'incubation dudit milieu liquide aqueux contenant au moins un micropolluant sous forme moléculaire ou de ladite surface contaminée par au moins un micropolluant avec au moins un composé nucléolipide de formule (I) telle que définie plus haut, et
- une étape de séparation de l'agrégat formé par ledit au moins un micropolluant sous forme moléculaire avec ledit au moins un composé nucléolipidique de formule (I) dans ledit milieu liquide aqueux ou de l'agrégat formé par ledit au moins un micropolluant avec ledit au moins un composé nucléolipidique de formule (I) sur ladite surface.

Par « incubation », on entend une période de mise en contact effectuée pendant une durée suffisante pour permettre l'interaction du ou des composé(s) de formule (I) avec le ou les micropolluant(s) moléculaire(s) présents dans le milieu liquide aqueux ou sur la surface. A titre purement indicatif, on peut, par exemple, effectuer l'incubation pendant une durée de 1 min à 4 h, notamment de 5 min à 2 h.

Cette incubation peut être effectuée, par exemple, à température ambiante.

La mise en contact peut être effectuée, par exemple, par dissolution ou dispersion du composé nucléolipidique de formule (I) dans le milieu aqueux, par application sur la surface contaminée d'une solution ou une suspension de composé nucléolipidique de formule (I) dans un solvant adapté tel que l'eau ou un solvant organique, ou par application sur ladite surface contaminée d'une poudre comprenant le, de préférence constituée de, composé nucléolipidique de formule (I).

Avantageusement, la concentration totale en composé(s) de formule(I) en solution ou en suspension dans un solvant adapté tel que l'eau ou un solvant organique peut être comprise entre 0,001 mg/mL et 1 mg/mL, de préférence inférieure à 1 mg/mL, en particulier de 0,01 mg/mL à 0,5 mg/ml, notamment de 0,1 à 0,5 mg/mL.

Avantageusement, ledit composé de formule (I) ne forme pas un gel à la concentration utilisée pour la décontamination.

La séparation peut être effectuée, par exemple, par décantation, centrifugation, filtration, essuyage mécanique, etc. selon des techniques connues dans le domaine technique, en fonction du milieu liquide aqueux et du volume à traiter ou en fonction de la surface à traiter.

La figure 1 représente les taux de décontamination obtenus pour le Propranolol® ou le Diclofénac® dans l'eau distillée, en présence ou en absence de composé nucléolipidique de formule (I).

La figure 2 représente les taux de décontamination obtenus pour le Propranolol® ou le Diclofénac® dans l'eau du robinet, en présence ou en absence de composé nucléolipidique de formule (I).

La figure 3 représente les taux de décontamination obtenus pour des solutions de Propranolol® et de Diclofénac® contenant soit un nucléolipide de formule (I) (DOTAU ou diC16dT), soit les deux nucléolipides, ajoutés simultanément ou successivement.

La figure 4 représente le taux de décontamination obtenu pour chacun des 13 micropolluants testés (figure 4A), ainsi que le taux de décontamination globale du cocktail de micropolluants (solution contenant les 13 micropolluants) (figure 4B).

L'invention est illustrée par les exemples suivants.

Exemple 1 : Décontamination d'un milieu liquide aqueux contenant du Propranolol® ou du Diclofénac® par un composé nucléolipide de formule (I)

On a utilisé le Propranolol® et le Diclofénac® (Sigma-Aldrich).

Les nucléolipides de formule (I) diC16dT et DOTAU ont été préparés selon les procédures décrites respectivement dans Khiati et al., Bioconjug. Chem, 2009, 20, 1765-1772, Bioconjug. Chem, 2009, 20, 1765-1772 et Chabaud et al., Bioconjug. Chem., 2006, 17, 466-472. On a également utilisé, à titre de comparaison, un composé décontaminant sous forme de poudre, disponible commercialement, le Trivorex® (Prevor).

1/ Préparation d'une solution de calibration du Propranolol®, du Diclofénac® et du Trivorex®

7 mg de produit (médicament ou Trivorex®) sont ajoutés à 7 ml d'eau déionisée (solution mère : 1 mg/mL).

La $\lambda$ max a été déterminée par des mesures spectrales pour chaque composé. Différentes solutions ont été réalisées à partir de leurs solutionsmères et dosées dans des cellules de quartz de 100 $\mu$l avec un spectrophotomètre-UV Jacso V-630. L'epsilon de chaque composé est déterminé à 258 nm, 266 nm, 276 nm et 289 nm (A=a x C+b avec A est l'absorbance, C la concentration, a est l'epsilon et b est la valeur de l'ordonnée à l'origine).

Le Trivorex® n'absorbe pas en solution d'eau distillée. Le même protocole a été utilisé dans l'eau du robinet (l'epsilon ne change pas dans l'eau du robinet).

Les concentrations des solutions de travail ont ainsi été déterminées pour le Propranolol® à 50$\mu$g/mL et pour le Diclofénac® à 20 $\mu$g/mL, pour des longueurs d'onde d'absorption respectives de 289 nm et 276 nm.

2/ Etude de la décontamination du Propranolol® par la diC16-3'-dT et du Diclofénac® par la DOTAU

Les expériences ont été réalisées en trois exemplaires. 10 mg de DiC16dT ont été ajoutés à 50 mL de solution à décontaminer (solution de Propanolol® à 50 $\mu$g/mL dans l'eau distillée ou dans l'eau du robinet).

Après incubation (15 min dans l'eau déionisée ou 2 h dans l'eau du robinet) sous agitation magnétique à température ambiante, 600 $\mu$L de cette solution ont été filtrés sur membrane Millex®-GS 0,22 $\mu$m, MF-Millipore.

Les spectres des échantillons ont été acquis à l'aide d'un spectrophotomètre UV avec des cellules de quartz de 100 $\mu$L. Les concentrations finales en Propranolol® et les pourcentages de décontamination ont été calculés par la méthode de mode multicomposant (Wagdarikar et al., Pharm. Sci. Res., 2015, 545, 2013-2018).

Le même protocole a été mis en œuvre pour une solution de Diclofénac® à 20 $\mu$g/mL dans l'eau distillée ou dans l'eau du robinet en utilisant la DOTAU et avec un temps d'incubation sous agitation magnétique de 10 min dans l'eau distillée ou de 30 min dans l'eau du robinet.

Le même protocole a été suivi en remplaçant, pour chacun des médicaments, le composé nucléolipide par le Trivorex®.

A titre de comparaison, on a également soumis des solutions contenant uniquement le Propranolol® ou le Diclofénac® (respectivement à 50 $\mu$g/mL et 20 $\mu$g/mL) dans l'eau distillée ou dans l'eau du robinet à une simple filtration sur membrane Millex®-GS 0,22 $\mu$m, MF-Millipore, en l'absence de composé nucléolipidique.

Pour la détermination des concentrations réelles en Propranolol® et en Diclofénac® et du pourcentage de décontamination, on a appliqué les formules 1 et 2 ci-dessous.

*Formule 1 : détermination de la concentration réelle en Propranolol® et du pourcentage de décontamination par la méthode du mode multicomposant.*

$$[\text{Propranolol}]\ \text{expérimental} = \frac{\text{A mélange 266nm} \times \varepsilon\ \text{DiC16dT 289nm} - \varepsilon\ \text{DiC16dT 266nm} \times \text{A mélange 289nm}}{\varepsilon\ \text{Propranolol 266nm} \times \varepsilon\ \text{DiC16dT 289nm} - \varepsilon\ \text{DiC16dT 266nm} \times \varepsilon\ \text{Propranolol 289nm}}$$

$$\%\ \text{décontamination} = 100 - \left( \frac{[\text{Propranolol}]\ \text{expérimental}}{[\text{Propranolol}]\ \text{solution de travail}} \times 100 \right)$$

*Formule 2 : détermination de la concentration réelle en Diclofénac® et du pourcentage de décontamination par la méthode du mode multicomposant.*

$$[\text{Diclofénac}]\ \text{expérimental} = \frac{\text{A mélange 258nm} \times \varepsilon\ \text{DOTAU 276nm} - \varepsilon\ \text{DOTAU 258nm} \times \text{A mélange 276nm}}{\varepsilon\ \text{Diclofénac 258nm} \times \varepsilon\ \text{DOTAU 276nm} - \varepsilon\ \text{DOTAU 258nm} \times \varepsilon\ \text{Diclofénac 276nm}}$$

$$\%\ \text{décontamination} = 100 - \left( \frac{[\text{Diclofénac}]\ \text{expérimental}}{[\text{Diclofénac}]\ \text{solution de travail}} \times 100 \right)$$

3/ Analyse des données

L'analyse des données a été effectuée en testant la normalité (test de Shapiro-Wilk) et l'homoscédasticité (test de Bartlett), puis on a utilisé le test paramétrique ANOVA pour détecter les différences significatives entre les méthodes de décontamination.

Lorsque le test ANOVA était significatif (p <0,05), le test Tukey post-hoc a été utilisé et a été noté de la manière suivante : non significatif (ns) pour p <0,05, faiblement significatif (*) pour p <0,05), très significatif (**) pour p <0,005, hautement significatif (***) pour p <0,0005.

4/ Résultats

Les résultats sont rapportés sur les figures 1 et 2.

a) La figure 1 représente les taux de décontamination obtenus pour le Propranolol® ou le Diclofénac® dans l'eau distillée dans les conditions suivantes :

- filtration seule, en l'absence de composé de formule (I) (colonne en blanc);
- ajout d'un composé de formule (I), à savoir DOTAU ou diC16dT, suivi d'une filtration (colonne en noir) ;
- ajout de Trivorex®, en l'absence de composé de formule (I); suivi d'une filtration (colonne en gris).

On observe un taux élevé de décontamination pour la solution contenant du Propanolol® en présence de diC16dT (93,69 ± 2,04%) et pour la solution contenant du Diclofénac® en présence de DOTAU (98,03 ± 0,51%). Ces taux de décontamination sont significativement supérieurs à ceux obtenus avec le Trivorex®, respectivement de 55 ± 5%( pour le Propanolol®) et inférieur à 5% (pour le Diclofénac®).

On observe que la filtration seule sur membrane de cellulose donne un faible taux de décontamination (19,80 ± 1,22%) pour la solution contenant du Propanolol®, qui présente une affinité pour la membrane de cellulose, et un taux de décontamination quasiment nul pour la solution contenant du Diclofénac® (1,86 ± 0,17%).

b) La figure 2 représente les taux de décontamination obtenus pour le Propranolol® ou le Diclofénac® dans l'eau du robinet, dans les mêmes conditions.

On observe des résultats similaires à ceux obtenus dans l'eau distillée : la seule décontamination effective est celle obtenue en mettant en œuvre les nucléolipides de formule (I) DOTAU ou diC16dT.

Exemple 2 : Etude de la décontamination du Propranolol® et du Diclofénac® en présence de plusieurs nucléolipides de formule (I)

On a effectué les mesures sur des solutions de Propranolol® et de Diclofénac® contenant soit un nucléolipide de formule (I) (DOTAU ou diC16dT), soit les deux nucléolipides, ajoutés successivement ou simultanément. A titre comparatif, on a également effectué une mesure avec une filtration seule, en l'absence de composé de formule (I).

Les différents mélanges ci-dessous ont été réalisés en trois exemplaires.

Pour chaque médicament on a préparé un mélange en ajoutant 10 mg de nucléolipide DOTAU ou diC16dT dans 50 mL de solution de médicament, puis 10 mg du nucléolipide DOTAU ou diC16dT différent du premier ajout, ou en dissolvant 10 mg de chaque nucléolipide en même temps dans 50 mL de solution de médicament. Dans les 2 cas, on a ensuite effectué une filtration.

Les mesures ont été effectuées après différents temps d'incubation à température ambiante. Les résultats sont rapportés sur la figure 3.

Pour le Propranolol® (à 50 μg/mL), on a mis en œuvre les conditions suivantes :

- ajout de diC16dT et incubation 15 min (colonne en gris clair);
- ajout de diC16dT et incubation 15 min, puis ajout de DOTAU et incubation 60 min (colonne en gris foncé);
- ajout simultané de diC16dT et de DOTAU et incubation 15 min (colonne en noir);
- ajout simultané de diC16dT et de DOTAU et incubation 120 min (colonne en hachuré).

Pour le Diclofénac® (à 20 μg/mL), on a mis en œuvre les conditions suivantes :

- ajout de DOTAU et incubation 10 min (colonne en gris clair);
- ajout de DOTAU et incubation 10 min, puis ajout de diC16dT et incubation 60 min (colonne en gris foncé);
- ajout simultané de diC16dT et de DOTAU et incubation 10 min (colonne en noir) ;
- ajout simultané de diC16dT et de DOTAU et incubation 120 min (colonne en hachuré).

A ces différents temps, la décontamination est mesurée à l'aide d'un spectrophotomètre UV (cellules de quartz de 100 μL) après avoir filtré 600 μL de solution de travail sur membrane Millex®-GS 0,22 μm, MF-Millipore.

A titre comparatif, on a également effectué la mesure, pour chacun des médicaments, après filtration seule, en l'absence de composé nucléolipidique de formule (I) (DOTAU ou diC16dT) (colonne en blanc).

5/ Résultats

Les résultats, rapportés sur la figure 3, montrent que :

- dans tous les cas, l'ajout de nucléolipide(s) de formule (I) (DOTAU et/ou diC16dT), seul ou en combinaison, permet d'obtenir une décontamination efficace et significative, en comparaison de la filtration qui ne permet pas d'obtenir un taux de décontamination satisfaisant ;
- pour le Diclofénac®, on n'observe pas de différence significative entre la décontamination effectuée par la DOTAU seule (97,06 ± 1,35% après 10 min) ou celle effectuée par l'addition séquentielle ou simultanée de DOTAU et diC16dT. Le temps d'incubation n'entraîne pas non plus de différence significative ;
- pour le Propranolol®, la décontamination effectuée par la diC16dT seule montre un taux de 93,69 ± 2,04% et on observe que l'addition simultanée de DOTAU et diC16dT permet d'obtenir un taux de décontamination de 72,71 ± 2,44% après seulement 15 min.

Ces résultats permettent d'envisager d'utiliser deux nucléolipides différents pour décontaminer un milieu liquide aqueux contenant différents types de micropolluants.

Exemple 3 : Etude de la décontamination de milieu aqueux comprenant un mélange de micropolluants avec la diC16dT

Le but de cette étude est de tester un système de décontamination de l'eau selon l'invention sur une eau pure artificiellement contaminée avec 13 micropolluants (cocktail).

Ces 13 micropolluants sont les médicaments et pesticides suivants: l'érythromycine, le propranolol, le métoprolol, la carbamazépine, la fluoxétine, le dichlorvos, l'éthinylestradiol, le diuron, l'isoproturon, l'alachlore, l'aclonifène, le chlorfenvinphos, et le quinoxifène.

Les 13 micropolluants ont été dilués à des concentrations au moins supérieures à 10 fois leurs limites de détection dans 500 mL d'eau. 3 réplicats de 50 mL de cette solution ont été décontaminés avec la diC16dT et selon le

même mode opératoire que celui de l'exemple 1, et les 4 échantillons (3 échantillons décontaminés + 50 mL de solution non décontaminée) ont été analysés par LCMS.

**Matériel et méthodes**

*Produits chimiques et solvants*

Les standards analytiques ont été achetés en qualité analytique avec une pureté ≥ 98% chez Sigma-Aldrich (St Quentin Fallavier, France).

Tous les solvants utilisés sont de qualité OptimaTM LC-MS (Fisher Scientific, Illkirch, France), y compris l'eau utilisée pour créer la solution de 500 mL.

*Préparation des solutions stock et de travail*

Les solutions stock (1 mg/mL) ont été préparées en diluant environ exactement 1 mg de chaque standard dans le volume correspondant des solvants appropriés. La pesée des standards a été effectuée sur une balance d'analyse Quintix 35-1S (Sartorius, Aubagne, France).

Afin de limiter la dégradation des standards, toutes les solutions ont été conservées à -20°C immédiatement après préparation et ce jusqu'à leur utilisation.

*Analyse LCMS*

*Chromatographie liquide*

La séparation par chromatographie a été effectuée avec un système de prélèvement automatique HTC PAL (CTC Analytics AG, Zwingen, Switzerland) couplée à un système HPLC Dionex Ultimate 3000 (ThermoFisher Scientific, Les Ullis, France) équipé de deux pompes (chargement et élution) et d'un VIM (Valve Interface Module) permettant d'éluer la SPE en ligne en backflush.

*Spectrométrie de masse*

Les analyses ont été effectuées en mode positif avec un Q-Exactive (ThermoFisher Scientific, Les Ullis, France) équipé d'une source HESI (Heated Electrospray Ionisation) (ThermoFisher Scientific, Les Ullis, France).

*Acquisition et exploitation des résultats*

L'acquisition et l'exploitation des résultats ont été effectuées avec le logiciel Xcalibur (ThermoFisher Scientific, Les Ullis, France). Le signal correspondant à chacun des contaminants a été validé d'après son m/z (avec une tolérance fixée à 5 ppm) et temps de rétention, et réintégré manuellement si nécessaire. Des droites d'étalonnage ont été obtenues pour chaque molécule dans de l'eau qualité LC-MS avec des concentrations allant jusqu'à 2 fois la concentration initiale de la solution test. Les paramètres de ces droites d'étalonnage (pente, ordonnée à l'origine et coefficient de régression linéaire) ont été obtenus grâce au logiciel Excel qui a ensuite été utilisé pour quantifier chaque molécule dans les échantillons.

Les résultats obtenus sont présentés dans le tableau 1 ci-dessous.

Pour chaque molécule sont présentées les concentrations avant et après décontamination (en µg/L) dans chaque échantillon, le pourcentage de décontamination et l'écart-type.

Tableau 1

| Micropolluant | Avant décontamination (µg/L) | Après décontamination (µg/L) | Décontamination (%) | Ecart-type (%) |
|---|---|---|---|---|
| Carbamazépine | 0,128 | 0,072 | 43,49 | 6,07 |
| Erythromycine | 3,998 | 0 (<LOD)* | 100 | 0 |
| Ethinylestradiol | 1,912 | 0,023 | 98,80 | 0,55 |
| Fluoxétine | 0,103 | 0 (<LOD) | 100 | 0 |
| Metoprolol | 0,104 | 0,0017 | 98,40 | 0,56 |

(suite)

| Micropolluant | Avant décontamination (µg/L) | Après décontamination (µg/L) | Décontamination (%) | Ecart-type (%) |
|---|---|---|---|---|
| Propranolol | 0,085 | 0 (<LOD) | 100 | 0 |
| Aclonifène | 3,762 | 0 (<LOD) | 100 | 0 |
| Alachlore | 0,092 | 0,0023 | 97,46 | 0,63 |
| Chlorfenvinphos | 0,075 | 0 (<LOD) | 100 | 0 |
| Dichlorvos | 0,094 | 0,056 | 40,07 | 1,63 |
| Diuron | 0,098 | 0,023 | 76,87 | 3,12 |
| Isoproturon | 0,993 | 0,46 | 54,08 | 4,60 |
| Quinoxifène | 2,688 | 0 (<LOD) | 100 | 0 |
| Cocktail | 14,132 | 0,63 | 95,51 | 0,48 |
| *LOD = limite de détection | | | | |

La figure 4 représente le taux de décontamination obtenu pour chacun des 13 micropolluants (figure 4A), ainsi que le taux de décontamination globale du cocktail (solution contenant les 13 micropolluants) (figure 4B).

Les résultats montrent que le procédé selon l'invention permet d'obtenir une décontamination significative pour des concentrations très faibles en micropolluants, de l'ordre de ou inférieures à 1µg/L.

Pour un cocktail de micropolluants, les résultats montrent que la décontamination est efficace pour une concentration totale de quelques dizaines de µg/L.

Exemple 4 : Décontamination de surface contaminée (lame de verre)

Sur une lame de verre (Marienfeld 76x26x1 mm, pure white glass, cut edges, plain), on dépose 10 µL de Quantum Dots (CdSeS/ZnS, 1 $g.L^{-1}$ dans du toluène, 6 nm). On laisser évaporer 1 h sous hotte. On dépose ensuite 20 µL de solution décontaminante.

Les essais ont été effectués avec une solution de DOTAU dans l'eau à 1%m/V ou dans un liquide ionique, le 1-butyl-3-méthylimidazolium bis(trifluorométhylsulfonyl)imide( BMIM TFSI) à 1%m/V ( soit 10 mg/mL).

Après avoir laissé la solution décontaminante au contact de la plaque de verre contaminée pendant 15 min, on nettoie la plaque en passant une lingette (Kimtech 05511) une fois verticalement, puis une fois horizontalement. La plaque est observée sous UV (366 nm) et photographiées.

A titre comparatif, on a également effectué l'observation d'une plaque contaminée avant traitement, d'une plaque contaminée avec simple essuyage par une lingette sans mise en contact avec la solution décontaminante, et de plaques contaminées soumise à une mise en contact avec de l'eau ou du liquide ionique, suivie d'un essuyage.

Les plaques contaminées sont photographiées avant et après traitement, puis les photos sont traitées par les logiciels de traitement d'image Mesurim® et Image J®.

Les résultats, exprimés en pourcentage de décontamination, sont représentés dans le tableau 2 ci-dessous.

Tableau 2

| Traitement après contamination | % décontamination |
|---|---|
| Lingette | 22% |
| Eau seule | 28% |
| Solution de DOTAU dans l'eau | 40% |
| BMIM TFSI seul | 42% |
| Solution de DOTAU dans BMIM TFSI | 74% |

Les résultats montrent que la présence de la DOTAU dans la solution décontaminante augmente significativement la décontamination de la plaque de verre.

## Revendications

1. Procédé de décontamination d'un milieu liquide aqueux contenant au moins un micropolluant sous forme moléculaire, ou d'une surface contaminée par un micropolluant, comprenant

    • une étape de mise en contact dudit milieu liquide aqueux contenant ledit au moins un micropolluant sous forme moléculaire ou de ladite surface contaminée par ledit au moins un micropolluant avec au moins un composé nucléolipidique de formule (I)

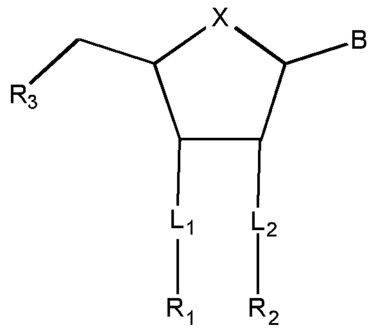

(I)

dans laquelle

- X est un atome d'oxygène, de soufre ou un groupe méthylène
- B représente une base purique ou pyrimidique, ou encore une base hétérocylique mono-ou bi-cyclique non naturelle dont chaque cycle comporte 4 à 7 chaînons, éventuellement substituée ;
- $L_1$ et $L_2$, identiques ou différents, représentent l'hydrogène, un groupe oxycarbonyl -O-C(O)-, un groupe thiocarbamate -O-C(S)-NH-, un groupe carbonate -O-C(O)-O-, un groupe carbamate -O-C(O)-NH-, un atome d'oxygène, un groupe phosphate, un groupe phosphonate ou un groupe hétéroaryle comprenant 1 à 4 atomes d'azote, substitué ou non substitué par une chaîne hydrocarbonée, saturée ou insaturée, linéaire ou ramifiée en $C_8$-$C_{30}$ ;
- ou $L_1$ représente un groupe phosphate ou phosphonate et $L_2$ représente l'hydrogène ;
- ou encore, $L_1$ et $L_{2,}$ ensemble, forment un groupement cétal de formule

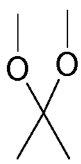

- ou encore $L_1$ ou $L_2$ représente l'hydrogène, et l'autre représente un groupe hydroxy ou un groupe hétéroaryle comprenant 1 à 4 atomes d'azote, non substitué ou substitué par une chaîne alkyle linéaire ou ramifiée en $C_8$-$C_{30\,;}$
- $R_1$ et $R_2$, identiques ou différents, représentent :
- une chaîne hydrocarbonée linéaire ou ramifiée en $C_8$-$C_{30}$, saturée ou comportant une ou plusieurs insaturations,
- une chaîne acyle en $C_8$-$C_{30}$,
- une chaîne diacyle dans laquelle chaque chaîne acyle est en $C_8$-$C_{30}$,
- un groupe diacylglycérol dans lequel chaque chaîne acyle est en $C_8$-$C_{30}$,
- un groupe sphingosine ou céramide, ou
- lorsque $L_1$ ou $L_2$ représente l'hydrogène, et l'autre représente un groupe hydroxy ou un groupe hétéroaryle comprenant 1 à 4 atomes d'azote, $R_1$ et $R_2$ n'existent pas ;
- $R_3$ représente :
- un groupement hydroxy, amino, phosphate, phosphonate, phosphatidylcholine, O-alkyl phosphatidylcholine, thiophosphate, phosphonium, $NH_2$-$R_4$, $NHR_4R_5$ ou $NR_4R_5R_6$ dans lesquels $R_4$, $R_5$ et $R_6$, identiques ou différents, représentent un atome d'hydrogène ou une chaîne alkyle linéaire ou ramifiée en $C_1$-$C_6$ ou hydroxyalkyle linéaire ou ramifiée en $C_1$-$C_6$, ou

- une chaîne alkyle linéaire ou ramifiée en $C_2$-$C_{30}$ éventuellement substituée par un groupe hydroxy, ou
- un groupe hétéroaryle renfermant 1 à 4 atomes d'azote, non substitué ou substitué par un alkyle en $C_2$-$C_{30}$, ou par un groupe $(CH_2)_m$-O-$(CH_2)_p$-$R_9$ dans lequel m = 1 à 6 et p = 0 à 20 et $R_9$ représente l'hydrogène ou un groupe cétal cyclique renfermant 5 à 7 atomes de carbone, non substitué ou substitué par au moins un alkyle linéaire ou ramifié en $C_2$-$C_{30}$ ou par un reste stérol, ou encore
- $R_3$ est lié par liaison covalente à un autre substituant $R_3$, identique ou différent, d'un autre composé de formule (I), identique ou différent, pour former un composé de formule (I) sous forme de dimère,

et

• une étape de séparation de l'agrégat formé par ledit au moins un micropolluant sous forme moléculaire avec ledit au moins un composé nucléolipidique de formule (I) dans ledit milieu liquide aqueux ou de l'agrégat formé par ledit au moins un micropolluant avec ledit au moins un composé nucléolipidique de formule (I) sur ladite surface.

**2.** Procédé selon la revendication 1, dans lequel

• l'étape de mise en contact est une étape de mise en contact d'un milieu liquide aqueux contenant au moins un micropolluant sous forme moléculaire avec au moins un composé nucléolipidique de formule (I) telle que définie dans la revendication 1,
et
• l'étape de séparation est une étape de séparation de l'agrégat formé par ledit micropolluant sous forme moléculaire avec ledit au moins un composé nucléolipidique de formule (I).

**3.** Procédé selon la revendication 1, dans lequel

• l'étape de mise en contact est une étape de mise en contact de ladite surface contaminée par au moins un micropolluant avec au moins un composé nucléolipidique de formule (I) telle que définie dans la revendication 1,
et
• l'étape de séparation est une étape de séparation de l'agrégat formé par ledit au moins un micropolluant avec ledit au moins un composé nucléolipidique de formule (I) sur ladite surface.

**4.** Procédé selon l'une quelconque des revendications 1 à 3, dans lequel on met en œuvre un seul composé de formule (I), ou dans lequel on met en œuvre 2 ou plus de 2 composés de formule (I) différents, de manière simultanée ou séquentielle.

**5.** Procédé selon l'une quelconque des revendications 1 à 4, comprenant

- une étape de mise en contact dudit milieu liquide aqueux contenant au moins un micropolluant sous forme moléculaire ou de ladite surface contaminée par au moins un micropolluant avec au moins un composé nucléolipidique de formule (I),
- une étape d'incubation dudit milieu liquide aqueux contenant au moins un micropolluant sous forme moléculaire ou de ladite surface contaminée par un micropolluant avec au moins un composé nucléolipidique de formule (I), et
- une étape de séparation de l'agrégat formé par ledit micropolluant sous forme moléculaire avec ledit au moins un composé nucléolipidique de formule (I) dans ledit milieu aqueux ou de l'agrégat formé par ledit micropolluant avec ledit au moins un composé nucléolipidique de formule (I) sur ladite surface.

**6.** Procédé selon la revendications 1 à 5, dans lequel la mise en contact est effectuée par dissolution ou dispersion du composé nucléolipidique de formule (I) dans le milieu aqueux, par application sur la surface contaminée d'une solution ou une suspension de composé nucléolipidique de formule (I) dans un solvant adapté tel que l'eau ou un solvant organique, ou par application sur ladite surface contaminée d'une poudre comprenant le composé nucléolipidique de formule (I) ou constituée du composé nucléolipidique de formule (I).

**7.** Procédé selon l'une quelconque des revendications 1 à6 dans lequel ledit micropolluant sous forme moléculaire répond à au moins l'une des conditions suivantes :

- il est constitué d'une seule molécule ;
- une de ses dimensions est inférieure à 0,5 nm ;
- il a un diamètre nominal inférieur à 0,5 nm ;

- il a une masse molaire comprise entre 60 g/mole et 5000 g/mole, de préférence entre 100 g/mole et 1000 g/mole ;
- il est une molécule organique.

8. Procédé selon l'une quelconque des revendications 1 à 7, dans lequel, dans la formule (I), B représente une base purique ou pyrimidique choisie parmi adénine, guanine, cytosine, xanthine, hypoxanthine, acide urique, caféine, théobromine, uracile, thymine, dihydrouridine, et leurs dérivés, de préférence thymine ou uracile.

9. Procédé selon l'une quelconque des revendications 1 à 8, dans lequel on met en œuvre au moins un composé de formule (I) dans laquelle :

- X est un atome d'oxygène, de soufre ou un groupe méthylène
- B représente une base purique ou pyrimidique;
- $L_1$ et $L_2$, identiques ou différents, représentent l'hydrogène, un groupe oxycarbonyl -O-C(O)-, un groupe thiocarbamate -O-C(S)-NH-, un groupe carbonate -O-C(O)-O-, un groupe carbamate -O-C(O)-NH-, un atome d'oxygène, un groupe phosphate, un groupe phosphonate ou un groupe hétéroaryle comprenant 1 à 4 atomes d'azote, substitué ou non substitué par une chaîne hydrocarbonée, saturée ou insaturée, linéaire ou ramifiée en $C_8$-$C_{30}$ ;
- $R_1$ et $R_2$, identiques ou différents, représentent :
- une chaîne hydrocarbonée linéaire ou ramifiée en $C_8$-$C_{30}$, saturée ou comportant une ou plusieurs insaturations,
- une chaîne acyle en $C_8$-$C_{30}$,
- une chaîne diacyle dans laquelle chaque chaîne acyle est en $C_8$-$C_{30}$,
- un groupe diacylglycérol dans lequel chaque chaîne acyle est en $C_8$-$C_{30}$,
- $R_3$ représente un groupement $NH_2$-$R_4$, $NHR_4R_5$ ou $NR_4R_5R_6$ dans lesquels $R_4$, $R_5$ et $R_6$, identiques ou différents, représentent un atome d'hydrogène ou une chaîne alkyle linéaire ou ramifiée en $C_1$-$C_6$ ou hydroxyalkyle linéaire ou ramifiée en $C_1$-$C_6$, ou un groupe hétéroaryle renfermant 1 à 4 atomes d'azote, non substitué ou substitué par un alkyle en $C_2$-$C_{30}$, ou par un groupe $(CH_2)_m$-O-$(CH_2)_p$-$R_9$ dans lequel m = 1 à 6 et p = 0 à 20 et $R_9$ représente l'hydrogène.

10. Procédé selon l'une quelconque des revendications 1 à 8, dans lequel on met en œuvre un composé nucléolipidique de formule (I) dans laquelle :

- X est un atome d'oxygène;
- B est choisi parmi adénine, guanine, cytosine, thymine et uracile;
- $L_1$ et $L_2$, identiques ou différents, représentent un groupe oxycarbonyl -O-C(O)-, un groupe carbonate -O-C(O)-O-, un groupe carbamate -O-C(O)-NH-, un atome d'oxygène ou un groupe phosphate et/ou l'un de $L_1$ et $L_2$ représente l'hydrogène ;
- $R_1$ et $R_2$, identiques ou différents, représentent une chaîne hydrocarbonée linéaire ou ramifiée en $C_8$-$C_{30}$, saturée ou comportant une ou plusieurs insaturations, une chaîne acyle en $C_8$-$C_{30}$, une chaîne diacyle dans laquelle chaque chaîne acyle est en $C_8$-$C_{30}$ ou un groupe diacylglycérol dans lequel chaque chaîne acyle est en $C_8$-$C_{30}$ ;
- $R_3$ représente un groupement hydroxy, amino, phosphate, phosphonate, thiophosphate, phosphonium, $NH_2$-$R_4$, $NHR_4R_5$ ou $NR_4R_5R_6$ dans lesquels $R_4$, $R_5$ et $R_6$, identiques ou différents, représentent un atome d'hydrogène ou une chaîne alkyle linéaire ou ramifiée en $C_1$-$C_6$ ou hydroxyalkyle linéaire ou ramifié en $C_1$-$C_6$.

11. Procédé selon l'une quelconque des revendications 1 à 8, dans lequel on met en œuvre un composé nucléolipidique de formule (I) dans laquelle :

- X est un atome d'oxygène;
- B est choisi parmi adénine, guanine, cytosine, thymine et uracile, de préférence uracile ou thymine;
- $L_1$ est un groupe phosphate substitué par un groupe $R_1$, dans lequel $R_1$ est un groupe diacylglycérol dans lequel chaque groupe acyle est en $C_8$-$C_{30}$, $L_2$ est l'hydrogène et $R_2$ n'existe pas, ou
- $L_1$ représente un groupe oxycarbonyl -O-C(O)- substitué par un groupe $R_1$ et $L_2$ représente et un groupe oxycarbonyl -O-C(O)- substitué par un groupe $R_2$, et $R_1$ et $R_2$, identiques ou différents, représentent chacun une chaîne hydrocarbonée linéaire ou ramifiée en $C_8$-$C_{30}$, comportant une ou plusieurs insaturations ;
- $R_3$ est un groupement hydroxy ou un groupe $NR_4R_5R_6$ dans lesquels $R_4$, $R_5$ et $R_6$ représentent un atome d'hydrogène.

**12.** Procédé selon la revendication 11, dans lequel on met en œuvre un composé nucléolipidique de formule (I) dans laquelle :

- X est un atome d'oxygène;
- B est la thymine;
- $L_1$ est un groupe phosphate substitué par un groupe $R_1$, dans lequel $R_1$ est un groupe diacylglycérol dans lequel chaque groupe acyle est en $C_8$-$C_{30}$, de préférence $C_8$-$C_{26}$, ou de manière plus préférée $C_{16}$-$C_{20}$, $L_2$ est l'hydrogène et $R_2$ n'existe pas, et,
- $R_3$ est un groupe hydroxy.

**13.** Procédé selon la revendication 11, dans lequel on met en œuvre un composé nucléolipidique de formule (I) dans laquelle :

- X est un atome d'oxygène;
- B représente l'uracile;
- $L_1$ représente un groupe oxycarbonyl -O-C(O)- substitué par un groupe $R_1$,
- $L_2$ représente un groupe oxycarbonyl -O-C(O)- substitué par un groupe $R_2$,
- $R_1$ et $R_2$, identiques ou différents, représentent chacun une chaîne hydrocarbonée linéaire ou ramifiée en $C_8$-$C_{30}$, de préférence en $C_{16}$-$C_{20}$, comportant une ou plusieurs insaturations,
- $R_3$ est un groupe $NR_4R_5R_6$ dans lesquels $R_4$, $R_5$ et $R_6$ représentent un atome d'hydrogène.

**14.** Procédé selon l'une quelconque des revendications 1 à 13, dans lequel on met en œuvre un composé nucléolipidique de formule (I) choisi parmi :

- Thymidine 3'-(1,2-dipalmitoyl-sn-glycero-3-phosphate;
- (N-[5'-(2',3'-dioléoyl)uridine]-N',N',N'-triméthylammonium tosylate).

**15.** Procédé selon l'une quelconque des revendications 1 à 14, dans lequel le micropolluant est un médicament, un dérivé de médicament, un métabolite de médicament, ou un composé ou une substance cancérigène, mutagène et/ou reprotoxique (CMR) ou un dérivé ou un métabolite de ceux-ci.

**16.** Procédé selon l'une quelconque des revendications 1 à 15, dans lequel le micropolluant est choisi parmi l'ofloxacine, la ciprofloxacine, l'érythromycine, le diclofénac, le propranolol, le métoprolol, la carbamazépine, la fluoxétine, le dichlorvos, la caféine, l'éthinylestradiol, le diuron, l'isoproturon, l'alachlore, l'aclonifène, le chlorfenvinphos, le quinoxifène, le cyclophosphamide, la doxorubicine, un taxane tel que paclitaxel ou docetaxel, un dérivé de platine ou le 5 fluorouracile.

**17.** Procédé selon l'une quelconque des revendications 1 et 3 à 16, dans lequel ladite surface est une surface à base de verre, de polymère, de silicone, ou de métal.

**18.** Utilisation d'au moins un composé de formule (I) telle que définie dans l'une quelconque des revendications 1 à 14 pour la décontamination d'un milieu liquide aqueux contenant au moins un micropolluant sous forme moléculaire ou d'une surface contaminée par au moins un micropolluant.

**Patentansprüche**

**1.** Verfahren zur Dekontaminierung eines wässrigen flüssigen Mediums, das zumindest einen Spurenstoff in molekularer Form enthält, oder einer durch einen Spurenstoff kontaminierten Oberfläche, umfassend

• einen Schritt des Inkontaktbringens des wässrigen flüssigen Mediums, das den zumindest einen Spurenstoff in molekularer Form enthält, oder der durch den zumindest einen Spurenstoff kontaminierten Oberfläche mit zumindest einer Nukleolipidverbindung der Formel (I)

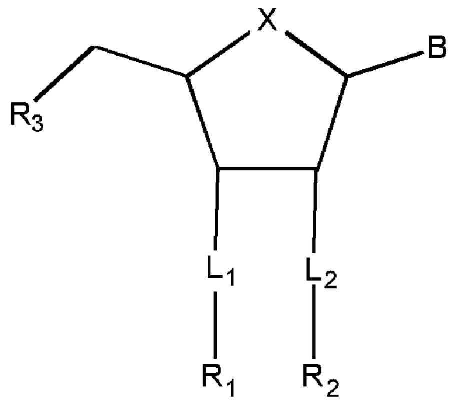

(I)

worin

- X ein Sauerstoff- oder Schwefelatom oder eine Methylengruppe ist,
- B eine Purin- oder Pyrimidinbase oder eine nicht-natürliche mono- oder bicyclische heterocyclische Base darstellt, bei der jeder Ring 4 bis 7 Glieder enthält und die gegebenenfalls substituiert sind;
- $L_1$ und $L_2$, die gleich oder verschieden sein können, Wasserstoff, eine Oxycarbonylgruppe -O-C(O)-, eine Thiocarbamatgruppe -O-C(S)-NH-, eine Carbonatgruppe -O-C(O)-O-, eine Carbamatgruppe -O-C(O)-NH-, ein Sauerstoffatom, eine Phosphatgruppe, eine Phosphonatgruppe oder eine Heteroarylgruppe mit 1 bis 4 Stickstoffatomen, die mit einer gesättigten oder ungesättigten, linearen oder verzweigten $C_8$-$C_{30}$-Kohlenwasserstoffkette substituiert oder unsubstituiert ist, darstellen;
- oder $L_1$ eine Phosphat- oder Phosphonatgruppe und $L_2$ Wasserstoff darstellt;
- oder $L_1$ und $L_2$ zusammen eine Ketalgruppe der Formel

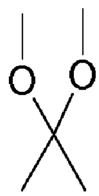

bilden,
- oder $L_1$ oder $L_2$ Wasserstoff darstellt und das andere eine Hydroxygruppe oder eine Heteroarylgruppe mit 1 bis 4 Stickstoffatomen, die unsubstituiert oder durch eine lineare oder verzweigte $C_8$-$C_{30}$-Alkylkette substituiert ist, darstellt;
- $R_1$ und $R_2$, die gleich oder verschieden sein können, stehen für:
- eine lineare oder verzweigte $C_8$-$C_{30}$-Kohlenwasserstoffkette, gesättigt oder mit einer oder mehreren Ungesättigtheiten,
- eine $C_8$-$C_{30}$-Acylkette,
- eine Diacylkette, bei der jede Acylkette $C_8$-$C_{30}$ ist,
- eine Diacylglycerin-Gruppe, bei der jede Acylkette $C_8$-$C_{30}$ ist,
- eine Sphingosin- oder Ceramidgruppe, oder
- wenn $L_1$ oder $L_2$ Wasserstoff darstellt und das andere eine Hydroxygruppe oder eine Heteroarylgruppe mit 1 bis 4 Stickstoffatomen darstellt, $R_1$ und $R_2$ nicht existieren;
- $R_3$ steht für:
- eine Hydroxy-, Amino-, Phosphat-, Phosphonat-, Phosphatidylcholin-, O-Alkylphosphatidylcholin-, Thiophosphat-, Phosphonium-, $NH_2$-$R_4$-, $NHR_4R_5$- oder $NR_4R_5R_6$-Gruppe, worin $R_4$, $R_5$ und $R_6$, die gleich oder verschieden sein können, ein Wasserstoffatom oder eine lineare oder verzweigte $C_1$-$C_6$-Alkylkette oder eine lineare oder verzweigte $C_1$-$C_6$-Hydro-xyalkylkette darstellen, oder
- eine lineare oder verzweigte $C_2$-$C_{30}$-Alkylkette, gegebenenfalls substituiert durch eine Hydroxygruppe, oder
- eine Heteroarylgruppe mit 1 bis 4 Stickstoffatomen, die unsubstituiert oder durch ein $C_2$-$C_{30}$-Alkyl oder eine $(CH_2)_m$-O-$(CH_2)_p$-$R_9$-Gruppe substituiert ist, in der m = 1 bis 6 und p = 0 bis 20 ist und $R_9$ Wasserstoff oder eine cyclische Ketalgruppe mit 5 bis 7 Kohlenstoffatomen darstellt, unsubstituiert oder durch zumindest

ein lineares oder verzweigtes $C_2$-$C_{30}$-Alkyl oder durch einen Sterolrest substituiert ist, oder

- $R_3$ kovalent an einen weiteren gleichen oder unterschiedlichen Substituenten $R_3$ einer weiteren gleichen oder unterschiedlichen Verbindung der Formel (I) gebunden ist, um eine Verbindung der Formel (I) in dimerer Form zu bilden, und

• einen Schritt der Abtrennung des Aggregats, das durch den zumindest einen Spurenstoff in molekularer Form mit der zumindest einen Nukleolipidverbindung der Formel (I) in dem wässrigen flüssigen Medium gebildet wird, oder des Aggregats, das durch den zumindest einen Spurenstoff mit der zumindest einen Nukleolipidverbindung der Formel (I) auf der Oberfläche gebildet wird.

**2.** Verfahren nach Anspruch 1, wobei

• der Schritt des Inkontaktbringens ein Schritt des Inkontaktbringens eines wässrigen flüssigen Mediums, das zumindest einen Spurenstoff in molekularer Form enthält, mit zumindest einer Nukleolipidverbindung der Formel (I) nach Anspruch 1 ist, und

• der Schritt der Abtrennung ein Schritt der Abtrennung des Aggregats ist, das durch den Spurenstoff in molekularer Form mit der zumindest einen Nukleolipidverbindung der Formel (I) gebildet wird.

**3.** Verfahren nach Anspruch 1, wobei

• der Schritt des Inkontaktbringens ein Schritt des Inkontaktbringens der mit zumindest einem Spurenstoff kontaminierten Oberfläche mit zumindest einer Nukleolipidverbindung der Formel (I) nach Anspruch 1 ist, und

• der Schritt der Abtrennung ein Schritt der Abtrennung des Aggregats ist, das durch den zumindest einen Spurenstoff mit der zumindest einen Nukleolipidverbindung der Formel (I) auf der Oberfläche gebildet wird.

**4.** Verfahren nach einem der Ansprüche 1 bis 3, wobei eine einzige Verbindung der Formel (I) verwendet wird, oder 2 oder mehr verschiedene Verbindungen der Formel (I) gleichzeitig oder nacheinander verwendet werden.

**5.** Verfahren nach einem der Ansprüche 1 bis 4, umfassend

- einen Schritt des Inkontaktbringens des wässrigen flüssigen Mediums, das zumindest einen Spurenstoff in molekularer Form enthält, oder der durch zumindest einen Spurenstoff kontaminierten Oberfläche mit zumindest einer Nukleolipidverbindung der Formel (I),
- einen Schritt des Inkubierens des wässrigen flüssigen Mediums, das zumindest einen Spurenstoff in molekularer Form enthält, oder der durch einen Spurenstoff kontaminierten Oberfläche mit zumindest einer Nukleolipidverbindung der Formel (I), und
- einen Schritt der Abtrennung des Aggregats, das durch den Spurenstoff in molekularer Form mit der zumindest einen Nukleolipidverbindung der Formel (I) in dem wässrigen Medium gebildet wird, oder des Aggregats, das durch den Spurenstoff mit der zumindest einen Nukleolipidverbindung der Formel (I) auf der Oberfläche gebildet wird.

**6.** Verfahren nach einem der Ansprüche 1 bis 5, wobei das Inkontaktbringen erfolgt durch Lösen oder Dispergieren der Nukleolipidverbindung der Formel (I) in dem wässrigen Medium, durch Aufbringen einer Lösung oder Suspension der Nukleolipidverbindung der Formel (I) in einem geeigneten Lösungsmittel, wie Wasser oder ein organisches Lösungsmittel, auf die kontaminierte Oberfläche oder durch Aufbringen eines Pulvers, das die Nukleolipidverbindung der Formel (I) enthält oder aus der Nukleolipidverbindung der Formel (I) besteht, auf die kontaminierte Oberfläche.

**7.** Verfahren nach einem der Ansprüche 1 bis 6, wobei der Spurenstoff in molekularer Form zumindest eine der folgenden Bedingungen erfüllt:

- er besteht aus einem einzigen Molekül;
- eine seiner Abmessungen beträgt weniger als 0,5 nm;
- er hat einen Nenndurchmesser von weniger als 0,5 nm;
- er hat eine Molmasse zwischen 60 g/mol und 5000 g/mol, vorzugsweise zwischen 100 g/mol und 1000 g/mol;
- er ist ein organisches Molekül.

**8.** Verfahren nach einem der Ansprüche 1 bis 7, wobei in der Formel (I) B eine Purin- oder Pyrimidinbase darstellt,

ausgewählt aus Adenin, Guanin, Cytosin, Xanthin, Hypoxanthin, Harnsäure, Koffein, Theobromin, Uracil, Thymin, Dihydrouridin und deren Derivaten, vorzugsweise Thymin oder Uracil.

**9.** Verfahren nach einem der Ansprüche 1 bis 8, wobei zumindest eine Verbindung der Formel (I) verwendet wird, in der:

- X ein Sauerstoff- oder Schwefelatom oder eine Methylengruppe ist,
- B eine Purin- oder Pyrimidinbase darstellt;
- $L_1$ und $L_2$, die gleich oder verschieden sein können, Wasserstoff, eine Oxycarbonylgruppe -O-C(O)-, eine Thiocarbamatgruppe -O-C(S)-NH-, eine Carbonatgruppe -O-C(O)-O-, eine Carbamatgruppe -O-C(O)-NH-, ein Sauerstoffatom, eine Phosphatgruppe, eine Phosphonatgruppe oder eine Heteroarylgruppe mit 1 bis 4 Stickstoffatomen, die mit einer gesättigten oder ungesättigten, linearen oder verzweigten $C_8$-$C_{30}$-Kohlenwasserstoffkette substituiert oder unsubstituiert ist, darstellen;
- $R_1$ und $R_2$, die gleich oder verschieden sein können, stehen für:
- eine lineare oder verzweigte $C_8$-$C_{30}$-Kohlenwasserstoffkette, gesättigt oder mit einer oder mehreren Ungesättigtheiten,
- eine $C_8$-$C_{30}$-Acylkette,
- eine Diacylkette, bei der jede Acylkette $C_8$-$C_{30}$ ist,
- eine Diacylglycerin-Gruppe, bei der jede Acylkette $C_8$-$C_{30}$ ist,
- $R_3$ eine $NH_2$-$R_4$-, $NHR_4R_5$- oder $NR_4R_5R_6$-Gruppe darstellt, in der $R_4$, $R_5$ und $R_6$, die gleich oder verschieden sein können, ein Wasserstoffatom oder eine lineare oder verzweigte $C_1$-$C_6$-Alkylkette oder eine lineare oder verzweigte $C_1$-$C_6$-Hydroxyalkylkette darstellen, oder eine Heteroarylgruppe mit 1 bis 4 Stickstoffatomen, unsubstituiert oder substituiert durch ein $C_2$-$C_{30}$-Alkyl oder durch eine $(CH_2)_m$-O-$(CH_2)_p$-$R_9$-Gruppe, in der m = 1 bis 6 und p = 0 bis 20 ist und $R_9$ Wasserstoff darstellt.

**10.** Verfahren nach einem der Ansprüche 1 bis 8, wobei eine Nukleolipidverbindung der Formel (I) verwendet wird, worin:

- X ein Sauerstoffatom ist;
- B ausgewählt ist aus Adenin, Guanin, Cytosin, Thymin und Uracil;
- $L_1$ und $L_2$, die gleich oder verschieden sein können, eine Oxycarbonylgruppe -O-C(O)-, eine Carbonatgruppe -O-C(O)-O-, eine Carbamatgruppe - O-C(O)-NH-, ein Sauerstoffatom oder eine Phosphatgruppe darstellen und/oder eines aus $L_1$ und $L_2$ Wasserstoff darstellt;
- $R_1$ und $R_2$, die identisch oder verschieden sein können, eine lineare oder verzweigte $C_8$-$C_{30}$-Kohlenwasserstoffkette, gesättigt oder mit einer oder mehreren Ungesättigtheiten, eine $C_8$-$C_{30}$-Acylkette, eine Diacylkette, bei der jede Acylkette $C_8$-$C_{30}$ ist, oder eine Diacylglycerin-Gruppe, bei der jede Acylkette $C_8$-$C_{30}$ ist, darstellen;
- $R_3$ eine Hydroxy-, Amino-, Phosphat-, Phosphonat-, Thiophosphat-, Phosphonium-, $NH_2$-$R_4$-, $NHR_4R_5$- oder $NR_4R_5R_6$-Gruppe darstellt, worin $R_4$, $R_5$ und $R_6$, die gleich oder verschieden sein können, ein Wasserstoffatom oder eine lineare oder verzweigte $C_1$-$C_6$-Alkylkette oder eine lineare oder verzweigte $C_1$-$C_6$-Hydroxyalkylkette darstellen.

**11.** Verfahren nach einem der Ansprüche 1 bis 8, wobei eine Nukleolipidverbindung der Formel (I) verwendet wird, worin:

- X ein Sauerstoffatom ist;
- B ausgewählt ist aus Adenin, Guanin, Cytosin, Thymin und Uracil, vorzugsweise Uracil oder Thymin;
- $L_1$ eine Phosphatgruppe ist, die durch eine $R_1$-Gruppe substituiert ist, wobei $R_1$ eine Diacylglycerin-Gruppe ist, in der jede Acylgruppe $C_8$-$C_{30}$ ist, $L_2$ Wasserstoff ist und $R_2$ nicht existiert, oder
- $L_1$ eine Oxycarbonylgruppe -O-C(O)- darstellt, die durch eine $R_1$-Gruppe substituiert ist, und $L_2$ eine Oxycarbonylgruppe -O-C(O)- darstellt, die durch eine $R_2$-Gruppe substituiert ist, und $R_1$ und $R_2$, die gleich oder verschieden sein können, jeweils eine lineare oder verzweigte $C_8$-$C_{30}$-Kohlenwasserstoffkette darstellen, die eine oder mehrere Ungesättigtheiten enthält;
- $R_3$ eine Hydroxygruppe oder eine $NR_4R_5R_6$-Gruppe ist, in der $R_4$, $R_5$ und $R_6$ ein Wasserstoffatom darstellen.

**12.** Verfahren nach Anspruch 11, wobei eine Nukleolipidverbindung der Formel (I) verwendet wird, worin:

- X ein Sauerstoffatom ist;
- B Thymin ist;
- $L_1$ eine Phosphatgruppe ist, die durch eine $R_1$-Gruppe substituiert ist, wobei $R_1$ eine Diacylglycerin-Gruppe ist, in der jede Acyl-Gruppe $C_8$-$C_{30}$, vorzugsweise $C_8$-$C_{26}$ oder noch bevorzugter $C_{16}$-$C_{20}$ ist, $L_2$ Wasserstoff ist und $R_2$ nicht existiert, und

- $R_3$ eine Hydroxygruppe ist.

**13.** Verfahren nach Anspruch 11, wobei eine Nukleolipidverbindung der Formel (I) verwendet wird, worin:

- X ein Sauerstoffatom ist;
- B Uracil darstellt;
- $L_1$ eine Oxycarbonylgruppe -O-C(O)- darstellt, die durch eine $R_1$-Gruppe substituiert ist,
- $L_2$ eine Oxycarbonylgruppe -O-C(O)- darstellt, die durch eine $R_2$-Gruppe substituiert ist,
- $R_1$ und $R_2$, die gleich oder verschieden sein können, jeweils eine lineare oder verzweigte $C_8$-$C_{30}$-, vorzugsweise $C_{16}$-$C_{20}$-Kohlenwasserstoffkette darstellen, die eine oder mehrere Ungesättigtheiten enthält,
- $R_3$ eine $NR_4R_5R_6$-Gruppe ist, in der $R_4$, $R_5$ und $R_6$ ein Wasserstoffatom darstellen.

**14.** Verfahren nach einem der Ansprüche 1 bis 13, wobei eine Nukleolipidverbindung der Formel (I) verwendet wird, ausgewählt aus:

- Thymidin-3'-(1,2-Dipalmitoyl-sn-glycero-3-phosphat);
- (N-[5'-(2',3'-Dioleoyl)uridin]-N',N',N'-Trimethylammoniumtosylat).

**15.** Verfahren nach einem der Ansprüche 1 bis 14, wobei der Spurenstoff ein Arzneimittel, ein Arzneimittelderivat, ein Arzneimittelmetabolit oder eine karzinogene, mutagene und/oder reprotoxische Verbindung oder Substanz (CMR) oder ein Derivat oder Metabolit davon ist.

**16.** Verfahren nach einem der Ansprüche 1 bis 15, wobei der Spurenstoff ausgewählt ist aus Ofloxacin, Ciprofloxacin, Erythromycin, Diclofenac, Propranolol, Metoprolol, Carbamazepin, Fluoxetin, Dichlorvos, Koffein, Ethinylestradiol, Diuron, Isoproturon, Alachlor, Aclonifen, Chlorfenvinphos, Quinoxifen, Cyclophosphamid, Doxorubicin, ein Taxan wie Paclitaxel oder Docetaxel, ein Platinderivat oder 5-Fluorouracil.

**17.** Verfahren nach einem der Ansprüche 1 und 3 bis 16, wobei die Oberfläche eine Oberfläche auf Glas-, Polymer-, Silikon- oder Metallbasis ist.

**18.** Verwendung zumindest einer Verbindung der Formel (I) nach einem der Ansprüche 1 bis 14 zur Dekontaminierung eines wässrigen flüssigen Mediums, das zumindest einen Spurenstoff in molekularer Form enthält, oder einer mit zumindest einem Spurenstoff kontaminierten Oberfläche.

## Claims

**1.** Method for decontaminating an aqueous liquid medium containing at least one micropollutant in molecular form, or a surface contaminated with a micropollutant, comprising

• a step of contacting said aqueous liquid medium containing said at least one micropollutant in molecular form or said surface contaminated with said at least one micropollutant with at least one nucleolipid compound of formula (I)

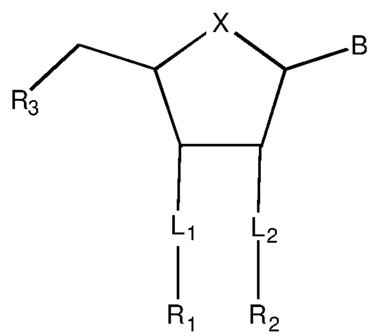

(I)

in which

- X is an atom of oxygen, sulfur or a methylene group
- B represents a purine or pyrimidine base, or else a non-natural heterocyclic mono- or bicyclic base, each ring of which comprises 4 to 7 members, optionally substituted;
- $L_1$ and $L_2$, identical or different, represent hydrogen, an -O-C(O)-oxycarbonyl group, an -O-C(S)-NH-thiocarbamate group, an -O-C(O)-O-carbonate group, an -O-C(O)-NH- carbamate group, an oxygen atom, a phosphate group, a phosphonate group or a heteroaryl group comprising from 1 to 4 nitrogen atoms, substituted or unsubstituted by a saturated or unsaturated, linear or branched $C_8$-$C_{30}$ hydrocarbon chain;
- or $L_1$ represents a phosphate or phosphonate group and $L_2$ represents hydrogen;
- or else, $L_1$ and $L_2$ together form a ketal group of formula

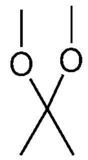

- or else $L_1$ or $L_2$ represents hydrogen, and the other represents a hydroxy group or a heteroaryl group comprising 1 to 4 nitrogen atoms, unsubstituted or substituted by a linear or branched $C_8$-$C_{30}$ alkyl chain;
- $R_1$ and $R_2$, identical or different, represent:
- a linear or branched $C_8$-$C_{30}$ hydrocarbon chain, saturated or comprising one or more unsaturations,
- a $C_8$-$C_{30}$ acyl chain,
- a diacyl chain in which each acyl chain is $C_8$-$C_{30}$,
- a diacylglycerol chain in which each acyl chain is $C_8$-$C_{30}$,
- a sphingosine or ceramide group, or
- when $L_1$ or $L_2$ represents hydrogen, and the other represents a hydroxy group or a heteroaryl group comprising 1 to 4 nitrogen atoms, $R_1$ and $R_2$ are not present;
- $R_3$ represents:
- a hydroxy, amino, phosphate, phosphonate, phosphatidylcholine, O-alkyl phosphatidylcholine, thiophosphate, phosphonium, $NH_2$-$R_4$, $NHR_4R_5$ or $NR_4R_5R_6$ group in which $R_4$, $R_5$ and $R_6$, identical or different, represent a hydrogen atom or a linear or branched $C_1$-$C_6$ alkyl or linear or branched $C_1$-$C_6$ hydroxyalkyl chain, or
- a linear or branched $C_2$-$C_{30}$ alkyl chain, optionally substituted by a hydroxy group, or
- a heteroaryl group containing 1 to 4 nitrogen atoms, unsubstituted or substituted by a $C_2$-$C_{30}$ alkyl, or by a $(CH_2)_m$-O-$(CH_2)_p$-$R_9$ group in which m = 1 to 6 and p = 0 to 20 and $R_9$ represents hydrogen or a cyclic ketal group containing 5 to 7 carbon atoms, unsubstituted or substituted by at least one linear or branched $C_2$-$C_{30}$ alkyl, or by a sterol residue, or else
- $R_3$ is linked by covalent bonding to another $R_3$ substituent, identical or different, of another compound of formula (I), identical or different, to form a compound of formula (I) in dimer form,
and

• a step of separating the aggregate formed by said at least one micropollutant in molecular form with said at least one nucleolipid compound of formula (I) in said aqueous liquid medium or the aggregate formed by said at least one micropollutant with said at least one nucleolipid compound of formula (I) on said surface.

**2.** Method according to claim 1, in which

• the contacting step is a step of contacting an aqueous liquid medium containing at least one micropollutant in molecular form with at least one nucleolipid compound of formula (I) as defined in claim 1,
and
• the separation step is a step of separating the aggregate formed by said micropollutant in molecular form with said at least one nucleolipid compound of formula (I).

**3.** Method according to claim 1, in which

• the contacting step is a step of contacting said surface contaminated with at least one micropollutant with at least one nucleolipid compound of formula (I) as defined in claim 1,
and

• the separation step is a step of separating the aggregate formed by said at least one micropollutant with said at least one nucleolipid compound of formula (I) on said surface.

**4.** Method according to any one of claims 1 to 3, in which a single compound of formula (I) is used, or in which 2 or more than 2 different compounds of formula (I) are used simultaneously or sequentially.

**5.** Method according to any one of claims 1 to 4, comprising

- a step of contacting said aqueous liquid medium containing at least one micropollutant in molecular form or said surface contaminated with at least one micropollutant with at least one nucleolipid compound of formula (I),
- a step of incubating said aqueous liquid medium containing at least one micropollutant in molecular form or said surface contaminated with a micropollutant with at least one nucleolipid compound of formula (I), and
- a step of separating the aggregate formed by said micropollutant in molecular form with said at least one nucleolipid compound of formula (I) in said aqueous liquid medium or the aggregate formed by said micropollutant with said at least one nucleolipid compound of formula (I) on said surface.

**6.** Method according to claims 1 to 5, in which contacting is carried out by dissolution or dispersion of the nucleolipid compound of formula (I) in the aqueous medium, by application on the contaminated surface of a solution or a suspension of nucleolipid compound of formula (I) in a suitable solvent such as water or an organic solvent, or by application on said contaminated surface of a powder comprising the nucleolipid compound of formula (I) or constituted by the nucleolipid compound of formula (I).

**7.** Method according to any one of claims 1 to 6, in which said micropollutant in molecular form meets at least one of the following conditions:

- it is constituted by a single molecule;
- one of its dimensions is less than 0.5 nm;
- it has a nominal diameter less than 0.5 nm;
- it has a molar mass comprised between 60 g/mol and 5000 g/mol, preferably between 100 g/mol and 1000 g/mol;
- it is an organic molecule.

**8.** Method according to any one of claims 1 to 7, in which, in formula (I), B represents a purine or pyrimidine base selected from adenine, guanine, cytosine, xanthine, hypoxanthine, uric acid, caffeine, theobromine, uracil, thymine, dihydrouridine, and derivatives thereof, preferably thymine or uracil.

**9.** Method according to any one of claims 1 to 8, in which at least one compound of formula (I) is used in which:

- X is an atom of oxygen, sulfur or a methylene group
- B represents a purine or pyrimidine base;
- $L_1$ and $L_2$, identical or different, represent hydrogen, an -O-C(O)-oxycarbonyl group, an -O-C(S)-NH- thiocarbamate group, an -O-C(O)-O-carbonate group, an -O-C(O)-NH- carbamate group, an oxygen atom, a phosphate group, a phosphonate group or a heteroaryl group comprising from 1 to 4 nitrogen atoms, substituted or unsubstituted by a saturated or unsaturated, linear or branched $C_8$-$C_{30}$ hydrocarbon chain;
- $R_1$ and $R_2$, identical or different, represent:
- a linear or branched $C_8$-$C_{30}$ hydrocarbon chain, saturated or comprising one or more unsaturations,
- a $C_8$-$C_{30}$ acyl chain,
- a diacyl chain in which each acyl chain is $C_8$-$C_{30}$,
- a diacylglycerol group in which each acyl chain is $C_8$-$C_{30}$,
- $R_3$ represents a $NH_2$-$R_4$, $NHR_4R_5$ or $NR_4R_5R_6$ group, in which $R_4$, $R_5$ and $R_6$, identical or different, represent a hydrogen atom or a linear or branched $C_1$-$C_6$ alkyl chain or linear or branched $C_1$-$C_6$ hydroxyalkyl chain, or a heteroaryl group containing 1 to 4 nitrogen atoms, unsubstituted or substituted by a $C_2$-$C_{30}$ alkyl, or by a $(CH_2)_m$-O-$(CH_2)_p$-$R_9$ group in which m = 1 to 6 and p = 0 to 20 and $R_9$ represents hydrogen.

**10.** Method according to any one of claims 1 to 8, in which a nucleolipid compound of formula (I) is used in which:

- X is an oxygen atom;
- B is chosen from adenine, guanine, cytosine, thymine and uracil;
- $L_1$ and $L_2$, identical or different, represent an -O-C(O)- oxycarbonyl group, an -O-C(O)-O- carbonate group,

an -O-C(O)-NH- carbamate group, an oxygen atom or a phosphate group and/or one from de $L_1$ and $L_2$ represents hydrogen;

- $R_1$ and $R_2$, identical or different, represent a linear or branched $C_8$-$C_{30}$ hydrocarbon chain, saturated or comprising one or more unsaturations, a $C_8$-$C_{30}$ acyl chain, a diacyl chain in which each acyl chain is $C_8$-$C_{30}$, or a diacylglycerol group in which each acyl chain is $C_8$-$C_{30}$;
- $R_3$ represents a hydroxy, amino, phosphate, phosphonate, thiophosphate, phosphonium, $NH_2$-$R_4$, $NHR_4R_5$ or $NR_4R_5R_6$ group in which $R_4$, $R_5$ and $R_6$, identical or different, represent a hydrogen atom or a linear or branched $C_1$-$C_6$ alkyl or linear or branched $C_1$-$C_6$ hydroxyalkyl chain.

**11.** Method according to any one of claims 1 to 8, in which a nucleolipid compound of formula (I) is used in which:

- X is an oxygen atom;
- B is chosen from adenine, guanine, cytosine, thymine and uracil, preferably uracil or thymine;
- $L_1$ is a phosphate group substituted by an $R_1$ group, in which $R_1$ is a diacylglycerol group in which each acyl group is $C_8$-$C_{30}$, $L_2$ is hydrogen and $R_2$ is not present, or
- $L_1$ represents an -O-C(O)- oxycarbonyl group substituted by an $R_1$ group and $L_2$ represents and an -O-C(O)- oxycarbonyl group substituted by an $R_2$ group, and $R_1$ and $R_2$, identical or different, each represent a linear or branched $C_8$-$C_{30}$ hydrocarbon chain, containing one or more unsaturations;
- $R_3$ is a hydroxy group or an NR4R5R6 group in which $R_4$, $R_5$ and $R_6$ represent a hydrogen atom.

**12.** Method according to claim 11, in which a nucleolipid compound of formula (I) is used in which:

- X is an oxygen atom;
- B is thymine;
- $L_1$ is a phosphate group substituted by an $R_1$ group, in which $R_1$ is a diacylglycerol group in which each acyl group is $C_8$-$C_{30}$, preferably $C_8$-$C_{26}$, or more preferably $C_{16}$-$C_{20}$, $L_2$ is hydrogen and $R_2$ is not present, and
- $R_3$ is a hydroxy group.

**13.** Method according to claim 11, in which a nucleolipid compound of formula (I) is used in which:

- X is an oxygen atom;
- B represents uracil;
- $L_1$ represents an -O-C(O)- oxycarbonyl group substituted by an $R_1$ group,
- $L_2$ represents an -O-C(O)- oxycarbonyl group substituted by an $R_2$ group,
- $R_1$ and $R_2$, identical or different, each represent a linear or branched $C_8$-$C_{30}$ hydrocarbon chain, preferably $C_{16}$-$C_{20}$, containing one or more unsaturations,
- $R_3$ is an NR4R5R6 group in which $R_4$, $R_5$ and $R_6$ represent a hydrogen atom.

**14.** Method according to any one of claims 1 to 13, in which a nucleolipid compound of formula (I) is used, selected from:

- Thymidine 3'-(1,2-dipalmitoyl-*sn*-glycero-3-phosphate;
- (N-[5'-(2',3'-dioleoyl)uridine]-N',N',N'-trimethylammonium tosylate).

**15.** Method according to any one of claims 1 to 14, in which the micropollutant is a medicament, a derivative of a medicament, a metabolite of a medicament, or a compound or a substance that is carcinogenic, mutagenic and/or reprotoxic (CMR) or a derivative or a metabolite thereof.

**16.** Method according to any one of claims 1 to 15, in which the micropollutant is selected from ofloxacin, la ciprofloxacin, erythromycin, diclofenac, propranolol, metoprolol, carbamazepine, fluoxetine, dichlorvos, caffeine, ethinylestradiol, diuron, isoproturon, alachlor, aclonifen, chlorfenvinphos, quinoxifen, cyclophosphamide, doxorubicin, a taxane such as paclitaxel or docetaxel, a platinum derivative or 5-fluoracil.

**17.** Method according to any one of claims 1 and 3 to 16, in which said surface is a surface based on glass, polymer, silicone or metal.

**18.** Use of at least one compound of formula (I) as defined in any one of claims 1 to 14 for the decontamination of an aqueous liquid medium containing at least one micropollutant in molecular form or a surface contaminated with at least one micropollutant.

Fig. 1

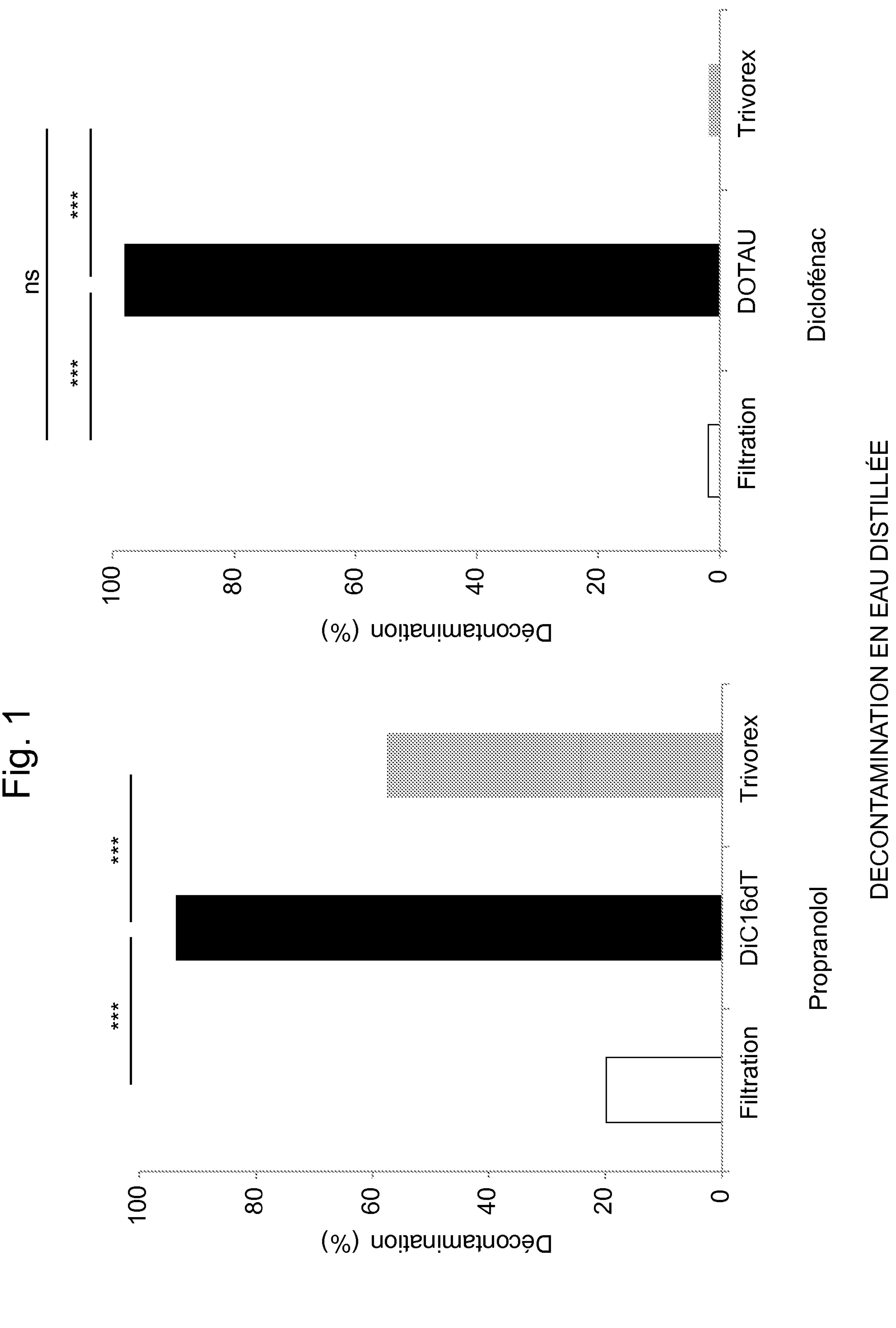
Décontamination (%)
100
80
60
40
20
0
***
***
Filtration
DiC16dT
Trivorex
Propranolol
Décontamination (%)
100
80
60
40
20
0
ns
***
***
Filtration
DOTAU
Trivorex
Diclofénac
DECONTAMINATION EN EAU DISTILLÉE

Fig. 2

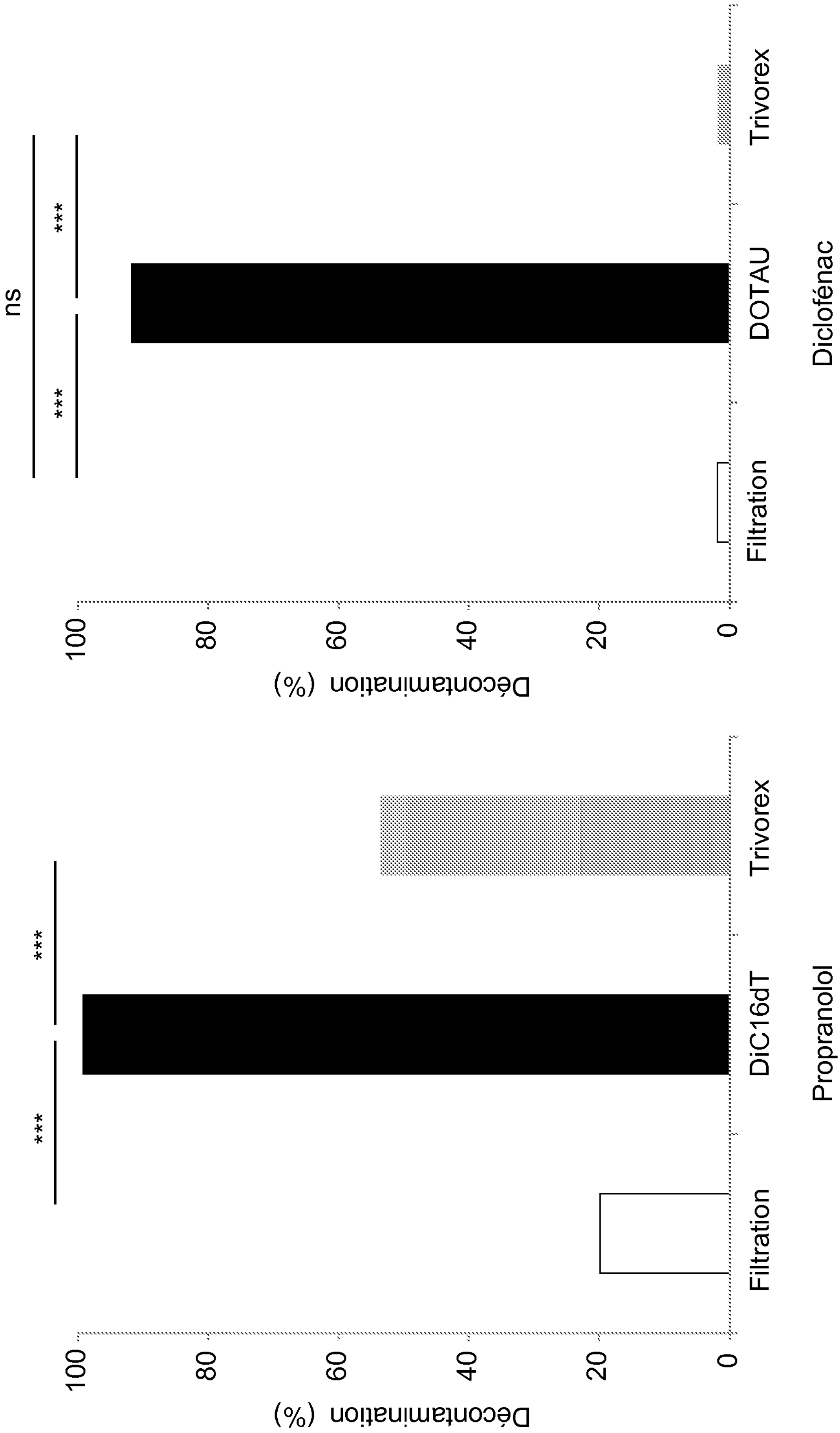


DECONTAMINATION EN EAU DU ROBINET

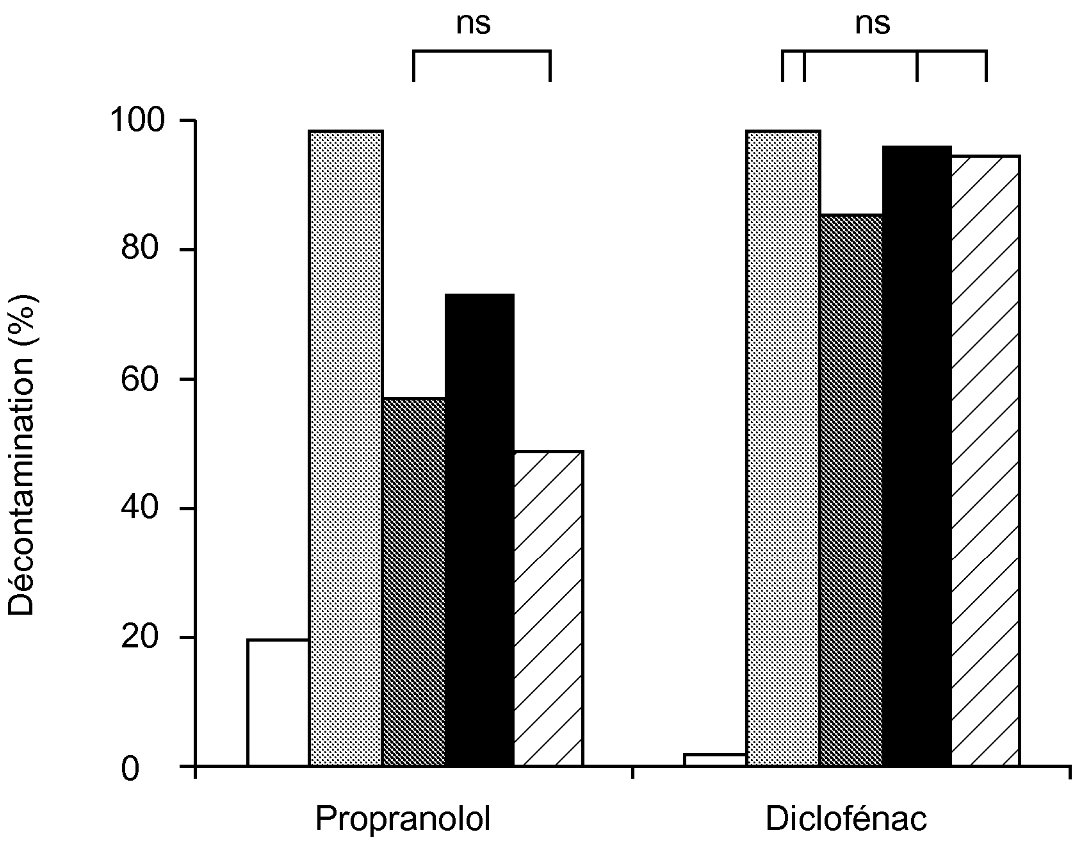
ns
ns
100
80
60
40
20
0
Décontamination (%)
Propranolol
Diclofénac

Fig. 3

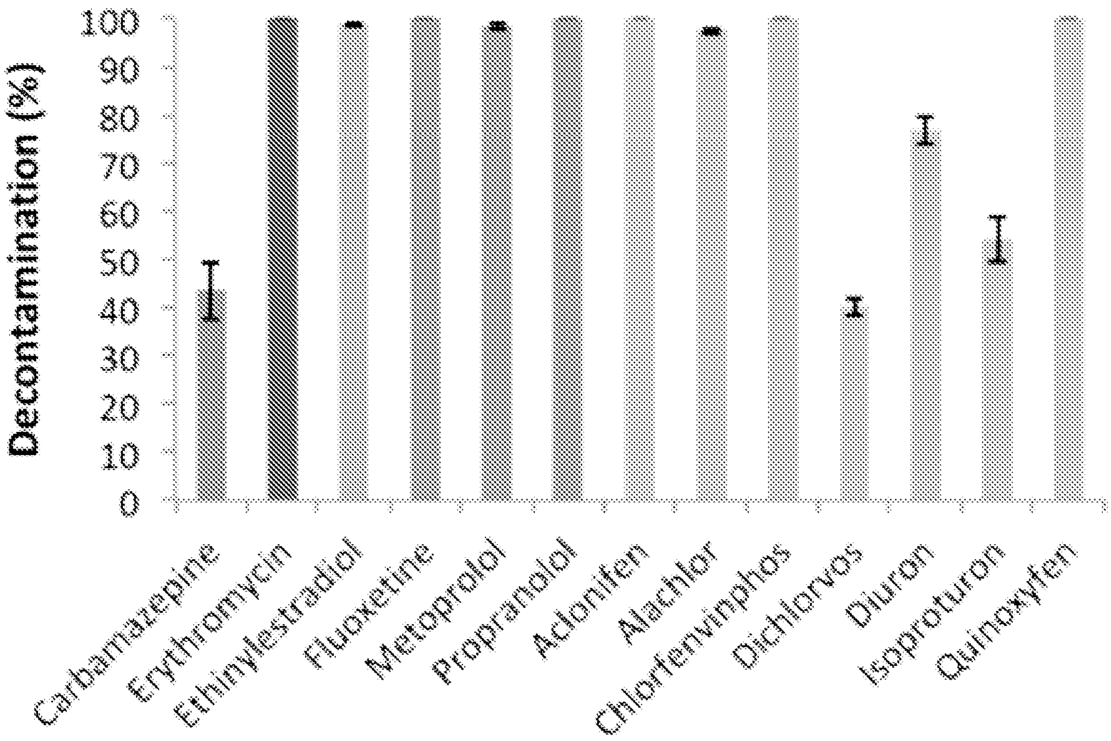
Decontamination (%)
0
10
20
30
40
50
60
70
80
90
100
Carbamazepine
Erythromycin
Ethinylestradiol
Fluoxetine
Metoprolol
Propranolol
Aclonifen
Alachlor
Chlorfenvinphos
Dichlorvos
Diuron
Isoproturon
Quinoxyfen

Fig. 4A

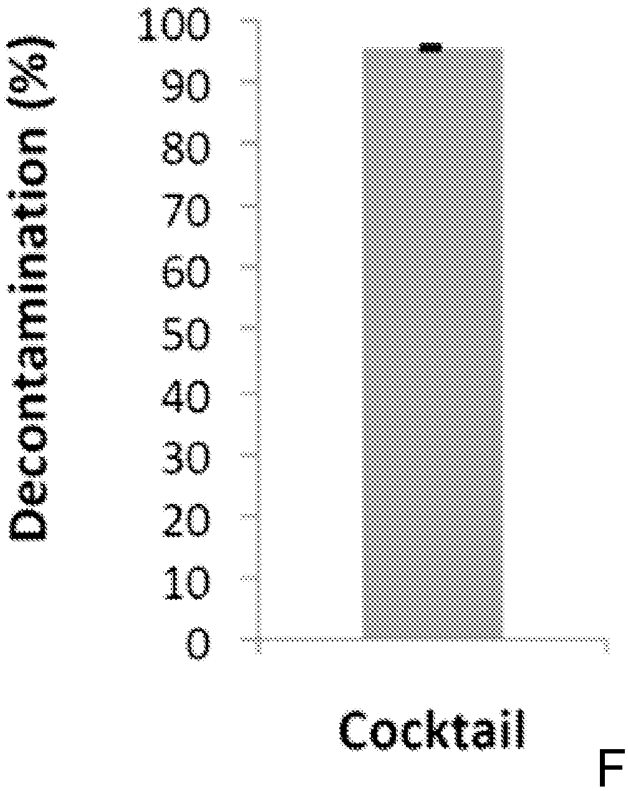
Decontamination (%)
0
10
20
30
40
50
60
70
80
90
100
Cocktail

Fig. 4B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2009098404 A
- WO 2010136676 A
- WO 2016170010 A
- WO 2013110902 A
- WO 2005116043 A


### Littérature non-brevet citée dans la description


- **Y. LUO et al.** *Science of the Total Environment,* 2014, 473-474, 619-641
- **B. HALLING-SORENSEN.** *Chemosphere,* 1998, vol. 36, 357-393
- **M. ISIDORI et al.** *Sci Total Environ,* 2005, vol. 348, 93-101
- **R. ROSAL et al.** *Water Res.,* 2010, vol. 44, 578-588
- **R. RENNER et al.** *Environ Sci Technol,* 2002, vol. 36, 268A-269A
- *CHEMICAL ABSTRACTS,* 1160002-70-9
- **P. CHABAUD et al.** *Bioconjugate Chem.,* 2006, vol. 17, 466-472
- **KHIATI et al.** *Bioconjug. Chem,* 2009, vol. 20, 1765-1772
- *Bioconjug. Chem,* 2009, vol. 20, 1765-1772
- **CHABAUD et al.** *Bioconjug. Chem.,* 2006, vol. 17, 466-472
- **WAGDARIKAR et al.** *Pharm. Sci. Res.,* 2015, vol. 545, 2013-2018